# EUROPEAN PATENT APPLICATION

(11) **EP 4 835 756 A2**
(43) Date of publication of application: **04.11.2026**
(21) Application number: 26205856.3
(22) Date of filing: 05.10.2022
(51) Int. Cl.: G06N 20/00

(54) **SYSTEMS AND METHODS FOR PREDICTING BALL FLIGHT DATA TO CREATE A CONSISTENTLY GAPPED GOLF CLUB SET**

(30) Priority: 05.10.2021 US 202163262128 P; 28.10.2021 US 202163263222 P
(62) Document number(s) of the earlier application(s) in accordance with Art. 76 EPC: 22879465.7 / 4 412 741
(71) Applicant: Karsten Manufacturing Corporation, Phoenix, AZ 85029 (US)
(72) Inventor: BROADIE, Christopher M., Phoenix, 85029 (US); JERTSON, Martin R., Phoenix, 85029 (US); WOOD, Paul D., Phoenix, 85029 (US)
(74) Representative: Mewburn Ellis LLP

(57) **Abstract**

A system includes a processor configured for leveraging reference ball flight data associated with an individual and a reference club having a reference loft angle to compute predicted ball flight characteristics for other candidate golf clubs having loft angles different from the reference loft angle. The predicted ball flight characteristics include predicted distances of golf shots the individual is expected to make using the candidate golf clubs that can further accommodate a computed recommendation of optimal loft angles for a consistently gapped golf club set.

## Description

### CROSS REFERENCE PRIORITIES

This claims the benefit of U.S. Provisional Application No. 63/262,128, filed October 5, 2021; and U.S. Provisional Application No. 63/263,222, filed October 28, 2021, all of which is incorporated herein by reference.

### TECHNICAL FIELD

The present disclosure relates to computing and tracking technologies for computer-implemented golf shot analysis and optimal club selection; and more particularly, to a tracking system and computer-implemented ball flight prediction system that utilizes ball flight data from a reference club to predict ball flight data of a plurality of candidate clubs for a golf club set.

### BACKGROUND

The typical golf club set comprises a plurality of golf clubs (i.e., a driver, fairway woods, hybrids, irons, and/or wedges), wherein each of the plurality of golf clubs comprises a club head with a unique loft angle. The different loft angles allow each of the golf clubs to hit a golf ball a different distance. The process of optimizing the distance of each club within the set is called "set gapping." Proper set gapping provides a golf club set wherein when faced with a golf shot of any distance, the golfer is able to select a club from the set that he or she knows will travel within a few yards of the desired distance. Typically, the loft angle of each club is selected during a fitting session to provide consistent gapping throughout the set. However, technology is lacking with respect to computed prediction of golf set combinations that efficiently optimize gapping for an individual player. In addition, it is not practical for a golfer to hit every single combination of club heads with different loft angles and measure the shot distance of each during a fitting session to achieve consistent gapping, as this is a very time-consuming process.

Accordingly, there is a technical need in the art for improved computed ball flight prediction technology that can accurately and efficiently predict the shot distance of different club heads for a specific individual and recommend particular loft angles for each club head for the individual in order to achieve consistent set gapping. Further, there is a need to accurately predict the shot distance of an entire set by measuring the ball flight of a single club. In doing so, club sets can be properly gapped during a fitting session without the player needing to hit shots with a club head of every available loft angle.

### SUMMARY

Aspects of the present disclosure may take the form of a computer-implemented system comprising a tracking device and a processor in operable communication with the tracking device. The tracking device generates a first dataset unique to an individual for each of a plurality of golf shots struck by the individual using a reference golf club comprising a reference loft angle, the first dataset including reference ball flight characteristics associated with movement of a golf ball. The processor is configured to transform the first dataset to a second dataset defining predicted ball flight characteristics for one or more candidate golf clubs. Specifically, the processor normalizes the reference ball flight characteristics defined by the first dataset as derived from the plurality of golf shots, generates a set of predicted ball flight characteristics for a candidate loft angle by input of the reference ball flight characteristics as normalized and the candidate loft angle to a predetermined ball flight trend function configured to predict changes in ball flight based upon predetermined correlations between loft angle and the ball flight characteristics, and adjusts the set of predicted ball flight characteristics by application of output from one or more adjustment computations that adjust for deviation of one or more of the reference ball flight characteristics of the individual from a predetermined threshold, the one or more adjustment computations improving computed-prediction accuracy by accounting for player-specific discrepancies. In some embodiments, the one or more adjustment computations include a ball speed adjustment component and a spin rate adjustment component that account for an effect on each predicted ball flight characteristic due to a deviation from a baseline ball speed value for the reference club and a baseline spin rate value for the reference club, respectively.

Aspects of the present disclosure may further take the form of a method comprising steps of: accessing, by a processor, data associated with the ball flight characteristics of a plurality of golf club shots struck by an individual using a reference club defining a reference club loft angle, the dataset including, for each of the plurality of golf shots, ball speed, launch angle, spin rate, club head speed, apex height, carry distance, and/or total distance; applying by the processor a ball flight trend function to an average of each ball flight characteristic in the dataset to produce a set of general ball flight predictions for a plurality of candidate clubs each defining candidate loft angle; applying by the processor one or more ball flight characteristics adjustments to each of the ball flight predictions to produce a set of adjusted ball flight predictions for the plurality of candidate clubs; and generating a recommendation of a combination of the plurality of candidate clubs (recommended clubs) that produces a minimal variation in gaps between predicted distances associated with each recommended club.

Aspects of the present disclosure may further take the form of a computer-readable medium comprising instructions executed by a processor to perform operations, including: accessing, by a processor, data associated with the ball flight characteristics of a plurality of golf club shots struck by an individual using a reference club defining a reference club loft angle, the dataset including, for each of the plurality of golf shots, ball speed, launch angle, spin rate, club head speed, apex height, carry distance, and/or total distance; applying by the processor a ball flight trend function to an average of each ball flight characteristic in the dataset to product a set of general ball flight predictions for a plurality of candidate clubs each defining candidate loft angle; applying by the processor one or more ball flight characteristics adjustments to each of the ball flight predictions to produce a set of adjusted ball flight predictions for the plurality of candidate clubs; determining a target gap, the target gap being a desired average gap between distances predicted for the candidate clubs; and generating a recommendation of a combination of the candidate clubs (recommended clubs) with candidate club loft angles that produces an average gap between the predicted distances of the recommended clubs that is closest to the target gap.

The foregoing examples broadly outline various aspects, features, and technical advantages of examples according to the disclosure in order that the detailed description that follows may be better understood. It is further appreciated that the above operations described in the context of the illustrative example method, device, and computer-readable medium are not required and that one or more operations may be excluded and/or other additional operations discussed herein may be included. Additional features and advantages will be described hereinafter. The conception and specific examples illustrated and described herein may be readily utilized as a basis for modifying or designing other structures for carrying out the same purposes of the present disclosure. Such equivalent constructions do not depart from the spirit and scope of the appended claims.

### BRIEF DESCRIPTION OF THE DRAWINGS

This disclosure relates to computing and tracking technologies for computer-implemented golf shot analysis and optimal club selection
FIG. 1A is a diagram of a computer-implemented system for generating reference ball flight data from a plurality of golf shots stuck by a golfer with a reference club using a tracking device, and a processor (of a computing device or otherwise) that applies the reference ball flight data to a predictive model to generate predicted ball flight characteristics for a plurality of candidate clubs and a recommended golf club set that optimizes gapping.
FIG. 1B is a simplified block diagram illustrating additional aspects of the predictive model executed by the processor introduced in FIG. 1A to compute the predicted ball flight characteristic data for candidate clubs.
FIGS. 2A-2C are illustrations of launch angles and loft angles for various candidate clubs as referenced herein.
FIG. 2D is an illustration of carry and total distance for the reference club shots and/or predictions for candidate clubs used to optimize gapping.
FIG. 3 is an illustration of normalization associated with the set of reference ball flight characteristics data described in FIG. 1A.
FIG. 4A is an illustration of ball flight prediction of the predictive model executed by the processor introduced in FIG. 1A yielding a predicted ball speed, a predicted launch angle, and a predicted spin rate for a candidate club having a candidate loft angle.
FIG. 4B is an illustration of ball flight prediction of the predictive model shown in FIG. 4A and including a ball flight trend function and one or more adjustment computations.
FIG. 5A is an illustration of ball speed prediction of the ball flight prediction introduced in FIGS. 4A and 4B.
FIG. 5B is an illustration of launch angle prediction of the ball flight prediction introduced in FIGS. 4A and 4B.
FIG. 5C is an illustration of spin rate prediction of the ball flight prediction introduced in FIGS. 4A and 4B.
FIG. 6 is an illustration of a plurality of ball flight predictions of the predictive model executed by the processor introduced in FIG. 1A for a plurality of candidate clubs.
FIG. 7 is an illustration of gapping for the plurality of candidate clubs and the reference club based on the plurality of ball flight predictions, including total distance and/or carry distance.
FIG. 8 is an illustration of selection of one or more recommended clubs from the plurality of candidate clubs based on gapping and the plurality of ball flight predictions.
FIG. 9 illustrates a process flow diagram representing one process for implementing the system of FIG. 1A to generate a recommendation for a predicted club set wherein the variation in the gap between each predicted distance is minimized
FIG. 10 illustrates a process flow diagram representing an alternative process for implementing the system of FIG. 1A to generate a recommendation for a predicted club set wherein the gap between each predicted distance is optimized about a predetermined target gap.
FIG. 11A is an illustration showing an overall hybrid adjustment for adjusting the set of predicted ball flight characteristic data for a hybrid candidate club.
FIG. 11B is an illustration showing an overall fairway wood adjustment for adjusting the set of predicted ball flight characteristic data for a fairway wood candidate club.
FIG. 12 illustrates a process flow diagram representing the process for implementing the system of FIG. 1A, wherein the system further recommends replacement clubs for predicted clubs that are determined "unplayable."
FIG. 13 is a screenshot of an exemplary user interface (UI) for providing further non-limiting details of the system described herein.

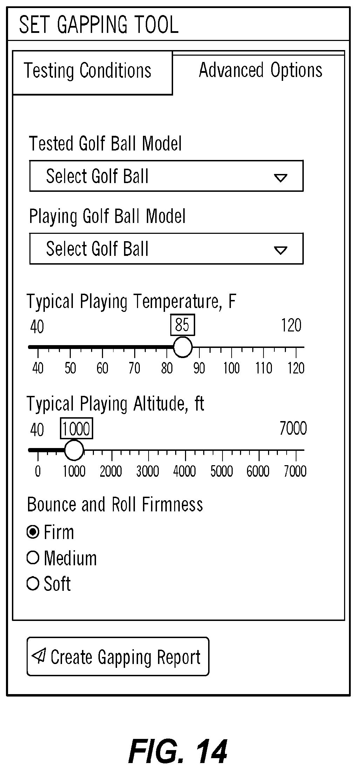

FIG. 14 is another screenshot of an exemplary user interface (UI) for providing further non-limiting details of the system described herein.
FIG. 15 is an exemplary computing system that may be implemented to execute functionality described herein.

Other aspects of the disclosure will become apparent by consideration of the detailed description and accompanying drawings.

### DESCRIPTION

Aspects of the present disclosure relate to a computer-implemented system and associated methods for measuring reference ball flight data for an individual striking a reference golf club having a reference loft angle; and leveraging the reference ball flight data to compute predicted ball flight characteristics for other candidate golf clubs having loft angles different from the reference loft angle (without the need to measure ball flight data for the individual using the candidate golf clubs). The predicted ball flight characteristics may include predicted distances of golf shots the individual is expected to make using the candidate golf clubs that can further accommodate a computed recommendation of optimal loft angles for a golf club set with consistent or predefined gapping targets.

The system records measured ball flight data from a single club hit by a player and transforms said data into predictions for said player's ball flight characteristics for an entire club set. The system applies general ball flight trends and factors in player-specific adjustments to arrive at an accurate prediction. The general ball flight trends are derived from a large sample of player test data. The player-specific adjustments correspond to deviations between the player's measured data and average values certain ball flight characteristics such as ball speed and spin rate.

More specifically, the system can include a tracking device that measures and records reference ball flight data corresponding to a set of golf shots struck by a reference club (e.g., one of the clubs in the set, preferably a mid-iron such as a 7-iron) and can further include (one or more of) a processor or processing element executing a predictive model that leverages the reference ball flight data to generate a prediction, or set of predictive ball flight characteristics for the ball flight of other potential candidate clubs in a set (e.g., other mid-irons, short-irons, long-irons, hybrids, and/or fairway woods) based on the individual-specific ball flight information derived from the golf shots by the reference club (reference ball flight data). For instance, parameters associated with candidate clubs (such as a candidate club loft angle) can be applied to the prediction model along with the individual-specific reference ball flight data, and the processor executing the predictive model can utilize such inputs to output predicted ball flight characteristics data for one or more candidate clubs. In some examples, the predictive model further includes one or more player-specific adjustment computations that can adjust the predicted ball flight characteristics data to account for player-specific deviations from predetermined player performance thresholds.

In addition, the processor can further output a set of "recommended clubs" selected from a plurality of candidate clubs, each having a "recommended loft angle" that collectively optimize gapping for the individual. As such, the system can recommend, choose, or otherwise identify a recommended combination or set of clubs from the plurality of candidate clubs based on various computations (pre-determined and defined by the predictive model) that feature an optimal combination of predicted loft angles for every club in the set to optimize the gapping of the set. The system can optimize gapping of the set of recommended clubs by selecting golf clubs that collectively result in the smallest predicted variation of each gap between adjacent clubs as described herein. In some examples the system can optimize gapping of the set of recommended clubs by selecting golf clubs from the candidate clubs that collectively result in gaps that meet certain criteria specified by the individual.

The term or phrase "reference golf club," "reference club," "example golf club," or "example club" used herein can be defined as a physical golf club used by a player to strike a plurality of reference golf shots that the tracking device measures to generate reference ball flight data. The reference ball flight data includes ball flight characteristics (ball speed, spin rate, launch angle, height, apex, carry distance, total distance, etc.) that are measured, recorded, and normalized to determine individual-specific ball flight tendencies of the player. The reference club can be any club in a golf club set including any wood-type, hybrid-type, or iron-type golf club.

The term or phrase "candidate club" or "candidate golf club" as used herein can be defined as a possible golf club for use by the individual as part of a club set combination to optimize gapping for the club set combination. The predictive model utilizes parameters of the candidate club among other information to compute predicted ball flight characteristics associated with the candidate club for the individual. The predicted ball flight characteristics for a given candidate club can include a predicted spin rate, a predicted launch angle, a predicted ball speed, a predicted total distance, and/or a predicted carry distance.

The term or phrase "recommended club" or "recommended golf club" as used herein can be defined as a selected candidate club that the system identifies as being optimal for producing a total "set of recommended clubs" with loft angle combinations that optimizes gapping. A given recommended club, being one of a plurality of candidate clubs, defines a particular loft angle and predicted ball flight characteristics generated in the manner as described herein. The set of predicted ball flight characteristic data for a given recommended club can include a predicted spin rate, a predicted launch angle, a predicted ball speed, a predicted total distance, and/or a predicted carry distance (note that these characteristics can be predicted for each candidate club prior to selection of one or more candidate clubs as recommended clubs).

In general, the system, executing the predictive model, generates a set of predicted ball flight characteristics data corresponding to a plurality of candidate clubs based on individual-specific ball flight data generated from a reference club, and can further select a unique combination of the candidate clubs as a plurality of recommended golf clubs that optimize gapping for the individual. To clarify, each recommended club is a selected candidate club and theoretical golf club for an individual to include in his/her golf bag whose ball flight characteristics are simulated based on measured and recorded ball flight characteristic data of the reference club as applied to the predictive model. For example, the reference club can be a 7-iron (e.g., an iron-type golf club head having a (reference) loft angle of approximately between 25 degrees and 35 degrees). A player can strike a plurality of golf shots with the 7-iron, and the system can record reference ball flight data including reference ball flight characteristics (e.g., ball speed, spin rate, launch angle, carry distance, total distance, etc.) from each of the plurality of golf shots with the 7-iron. The system can then generate, by execution of the predictive model, a set of corresponding predicted ball flight characteristics for any other candidate clubs (e.g., 3-iron, 4-iron, 5-iron, 6-iron, 8-iron, 9-iron, and any fairway woods, hybrids, and/or wedges). For each recommended golf club selected from candidate clubs, a set of predicted ball flight characteristics associated with a particular loft angle can be generated. As such, the system can create predictions for a plurality of different candidate clubs with various loft angles. By comparing the predicted ball flight characteristics associated with each candidate club, the computing system recommends (from a set of candidate clubs) an optimal combination of recommended clubs according to which combination is predicted to produce the golf club set with the most consistent gapping (i.e., the most consistent or desirable variation in gaps between the distance of each recommended club). By this method, an optimal combination of clubs for an individual to use in his or her golf club set is predicted without the individual having to hit every single club during a fitting session.

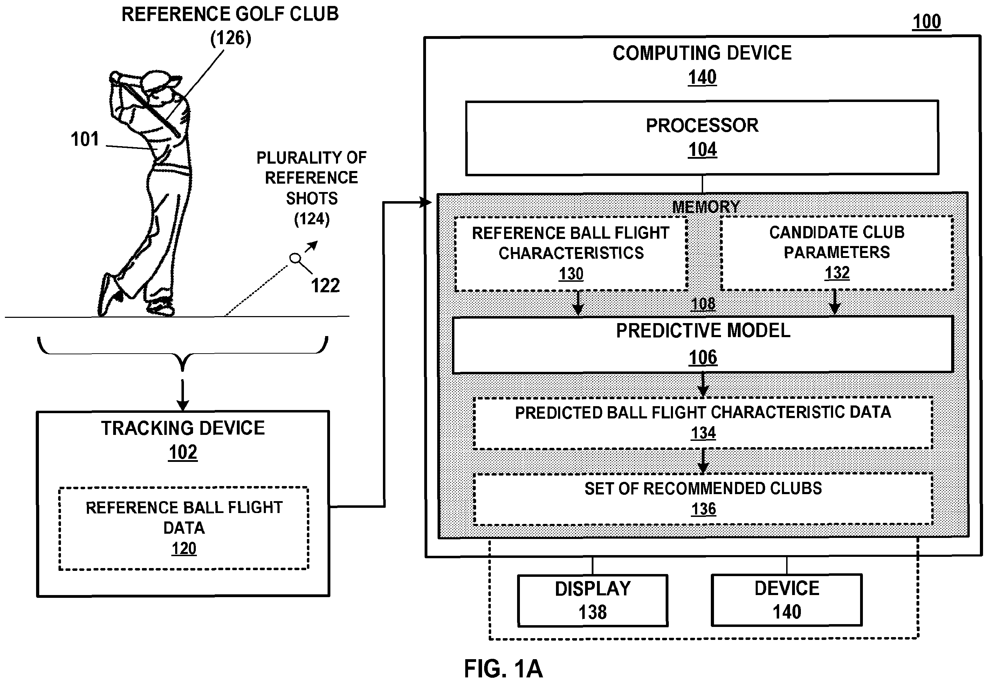

Referring to FIG. 1A, an example computer-implemented system, designated system **100** is shown that predicts ball flight data for an individual **101** with improved computed prediction functionality and can further select or recommend a golf club set that provides consistent gapping for the individual. In general, as indicated, the system **100** includes a tracking device **102** and at least one processor **104** or processing element which may be implemented as part of a computing device (e.g., computing device **140**), cloud environment, or the like. As indicated, the processor **104** executes a predictive model **106** stored in a memory **108** or otherwise stored that can define or be embodied as code and/or machine-executable instructions executable by the processor **104** and may represent one or more of a procedure, a function, a subprogram, a program, a routine, a subroutine, a module, an object, a software package, a class, or any combination of instructions, data structures, or program statements, and the like. In other words, aspects of the computed ball flight characteristics prediction functionality described herein may be implemented by hardware, software, firmware, middleware, microcode, hardware description languages, or any combination thereof. When implemented in software, firmware, middleware or microcode, the program code or code segments to perform the necessary tasks (e.g., a computer-program product) of the predictive model **106** may be stored in a computer-readable or machine-readable medium such as the memory **108**, and the processor **104** performs the tasks defined by the code. Accordingly, the predictive model **106** as executed by the processor **104** configures the processor **104** for computed ball flight characteristics prediction according to and/or defining various functions and functionality as described herein.

In general, the tracking device generates a first dataset defining reference ball flight data **120** by, e.g., measuring characteristics associated with movement of a plurality of golf balls **122** as the individual **101** completes a plurality of reference shots **124** with the golf balls **122** using a reference club **126**. By non-limiting examples, the reference ball flight data **120** may include reference ball flight characteristics (of the golf ball **122**) such as ball speed, spin rate, launch angle, height, apex, carry distance, total distance, or other metrics measured by the tracking device **102** for each of the plurality of reference shots **124** with the reference club **126**. In some examples, the reference club **126** is a 7-iron (e.g., an iron-type golf club head having a (reference) loft angle of approximately between 25 degrees and 35 degrees), but the tracking device **102** can generate the reference ball flight data **120** using any type and loft angle of club the individual **101** selects for the reference club **126**. The tracking device **102** may generate the first dataset to include reference ball flight data **120** for any number of shots the individual **101** strikes with the reference club **126**.

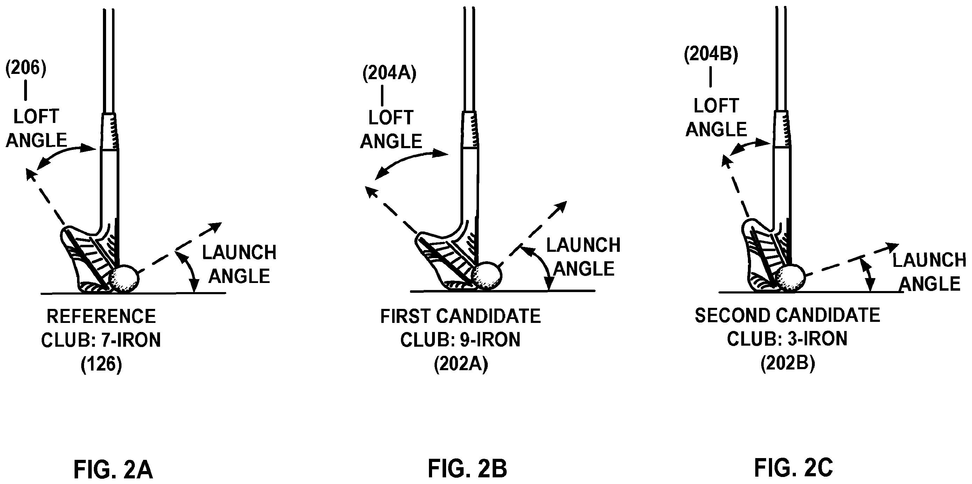

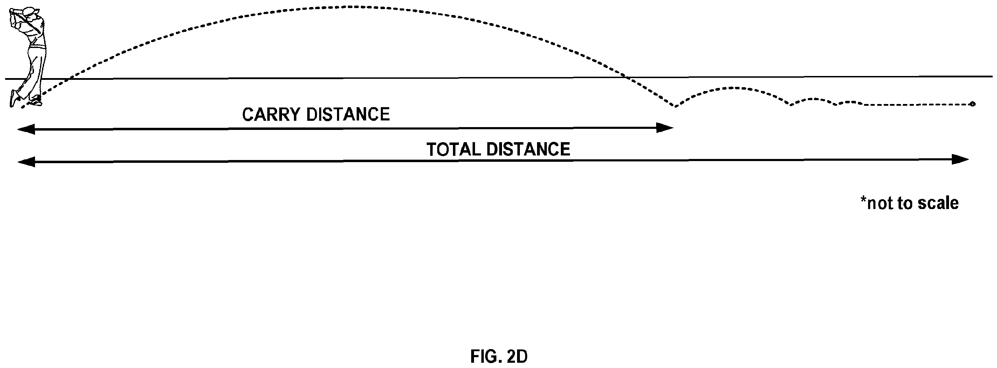

The processor **104** accesses the reference ball flight data **120** and executes the predictive model **106** to transform the reference ball flight data **120** to a second dataset defining predicted ball flight characteristics **134** for one or more candidate clubs. More particularly, in some examples, the reference ball flight data **120** is normalized or otherwise preprocessed to derive a set of reference ball flight characteristics **130**. The processor **104** then derives predicted ball flight characteristics **134** for each of a plurality of candidate clubs (**202** in FIGS. **2B-2C**) by application of a ball flight trend function and can apply one or more adjustment computations defined by the predictive model **106** in view of inputs including the set of reference ball flight characteristics **130** and one or more candidate club parameters **132** (e.g., a loft angle value of each candidate club), as further described herein. FIGS. **2A-2C** illustrate a general example comparing the reference club **126** to candidate clubs **202**; designated first candidate club **202A**, and second candidate club **202B**. In the example shown, the predictive model **106** leverages candidate club parameters **132** including a first loft angle **204A** defined by the first candidate club **202A**, and a second loft angle **204B** defined by the second candidate club **202B** to derive the predicted ball flight characteristics **134** including predicted ball flight characteristics for the first candidate club **202A** and the second candidate club **202B**, respectively. In this example, the predicted ball flight characteristics **134** can include a predicted carry distance and/or total distance (illustrated in FIG. **2D**) that the individual **101** would likely hit a golf ball using the first candidate club **202A** and the second candidate club **202B**. In addition, as indicated in FIG. **1A**, the predicted ball flight characteristics **134** can be utilized to generate a set of recommended clubs **136** for the individual **101** that optimizes gapping, or provides other utility, as further described herein.

It would be appreciated that the memory **108** can store the first dataset obtained by the tracking device **102** (including the reference ball flight characteristics **130**) and the second dataset generated by the processor **104** executing the predictive model **106**, any data used to execute and/or tune the ball flight trend function (such as baseline ball speed, baseline spin rate, and adjustment parameters) defined by the predictive model **106**, as well as any data pertaining to the candidate clubs **202** such as the candidate loft angles and the set of predicted ball flight characteristics **134** associated with each candidate club. Further, the system **100** can include a display device **138** in communication with the processor **104** that displays information associated with any of the data described herein, and information associated with any of the foregoing can be transmitted or otherwise made accessible to other computing devices (e.g., device **140**).

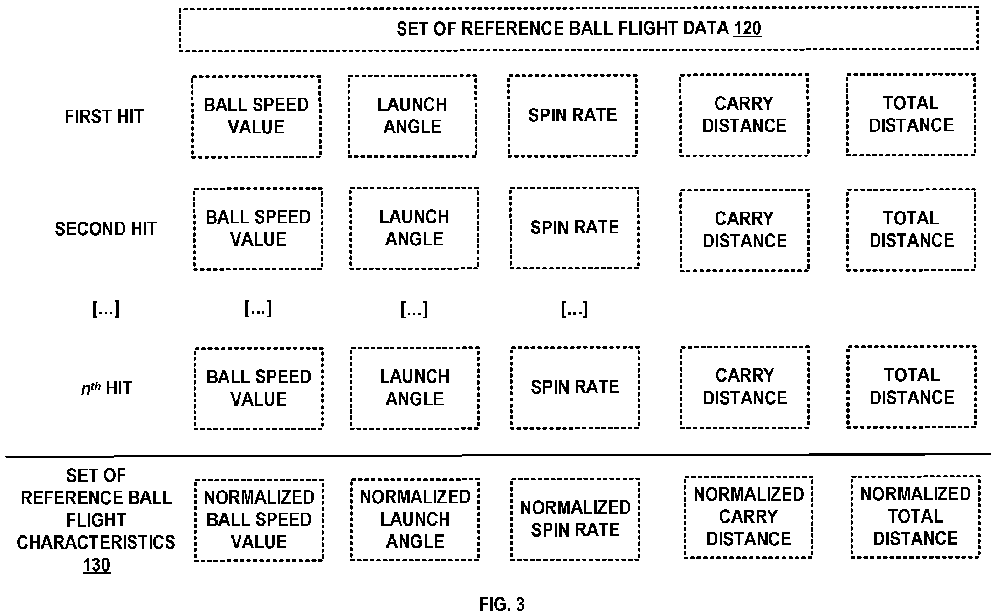

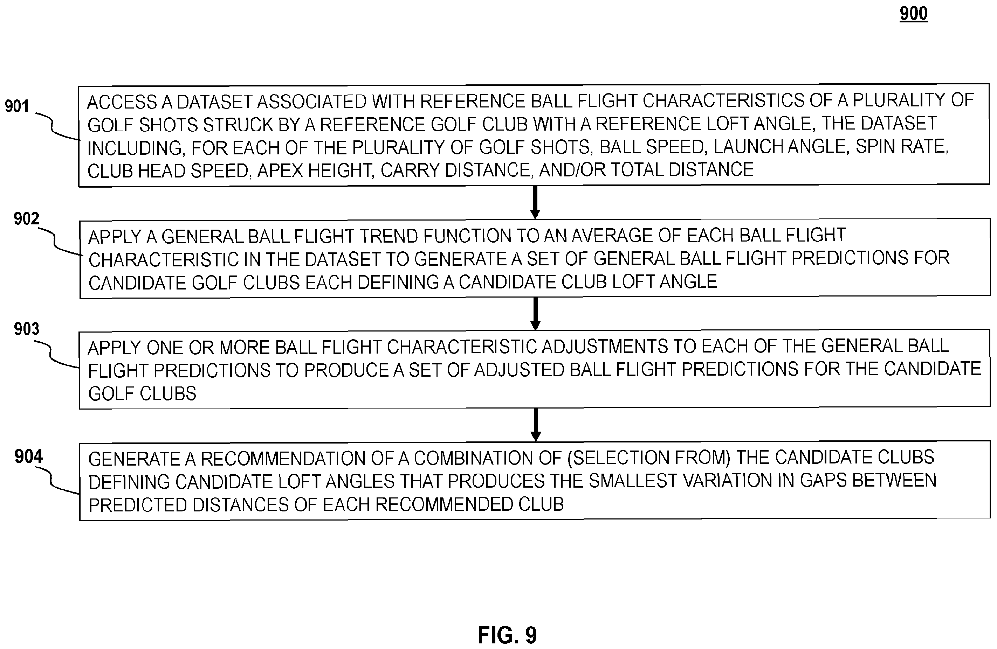

Referring now to a process flow diagram of FIG. 9, one method **900** of implementing or otherwise illustrating aspects of the system **100** shall now be described. Referring to block **901**, in many examples, the processor **104** accesses the reference ball flight data **120** generated by the tracking device **102** as described herein, and normalizes the data (e.g., takes an average of each ball flight characteristic available) to prepare the reference ball flight characteristics **130**. In some examples of this step, as shown in FIG. **3**, the processor **104** can generate the reference ball flight characteristics **130** that are specific to the individual **101**, including a normalized ball speed value **231**, a normalized launch angle value **232**, a normalized spin rate value **233**, a normalized carry distance **234**, a normalized total distance **235**, and/or a normalized apex height from the set of reference ball flight data **120**. Such normalized values are used to characterize the overall ball flight associated with the reference loft angle (**206** in FIG. **2A**) of the reference club **126** for the individual **101**. In other examples, the processor **104** accesses the reference ball flight characteristics **130** that are specific to the individual **101**, including the normalized ball speed value **231**, the normalized launch angle value **232**, the normalized spin rate value **233**, the normalized carry distance **234**, the normalized total distance **235**, and/or the normalized apex height, where the reference ball flight characteristics **130** are already normalized prior to retrieval by the processor **104**. The processor **104** can apply the following functions and processes with respect to the normalized values to any ball flight characteristic of the reference ball flight characteristics **130**. The predictions generated by the processor **104** for various candidate clubs **202** can be predictions of the average ball flight characteristics associated with different candidate loft angles **204** of candidate clubs **202** that may be selected for the individual **101**. In this way, the set of recommended clubs **136** the system **100** produces as an optimal combination of clubs in a set is likely to be accurate and correlate to high performance in the field for the individual **101**.

### General Ball Flight Trend

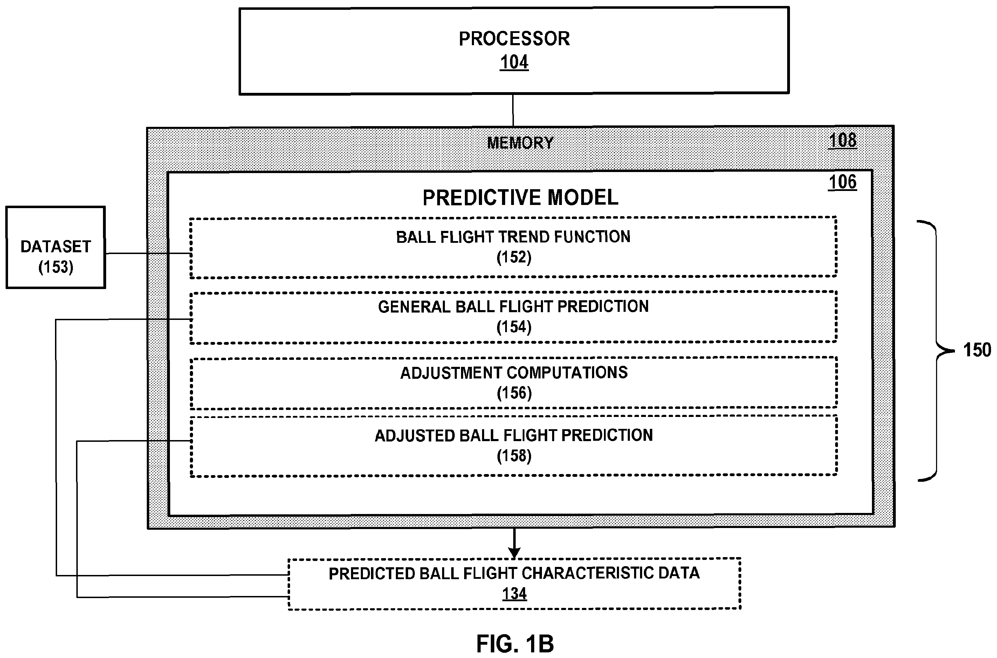

As shown in FIG. **1B**, the processor **104** applies a ball flight prediction process **150** defined by the predictive model **106** to the reference ball flight characteristics **130** (that is generated from the tracking device **102** measuring the plurality of reference shots **124** when the individual **101** hits the plurality of golf balls **122** using the reference club **126**) to generate the set of predicted ball flight characteristics **134** for the candidate clubs **202**. Referring to block **902**, the processor **104**, applying a ball flight trend function **152** defined by the predictive model **106**, first transforms the reference ball flight characteristics **130** to a general ball flight prediction **154** for each candidate club **202** (e.g., an "overall trend" component of one or more predicted ball flight characteristics). The ball flight trend function **152** is a predetermined function derived from observed relationships between club head loft angle and ball flight characteristics (e.g., ball speed, spin rate, and launch angle) of different clubs within a set and known/historical ball flight data from a ground truth dataset or corpus (e.g., dataset **153**), and is configured to predict changes in ball flight based on such observed and/or known relationships and historical data.

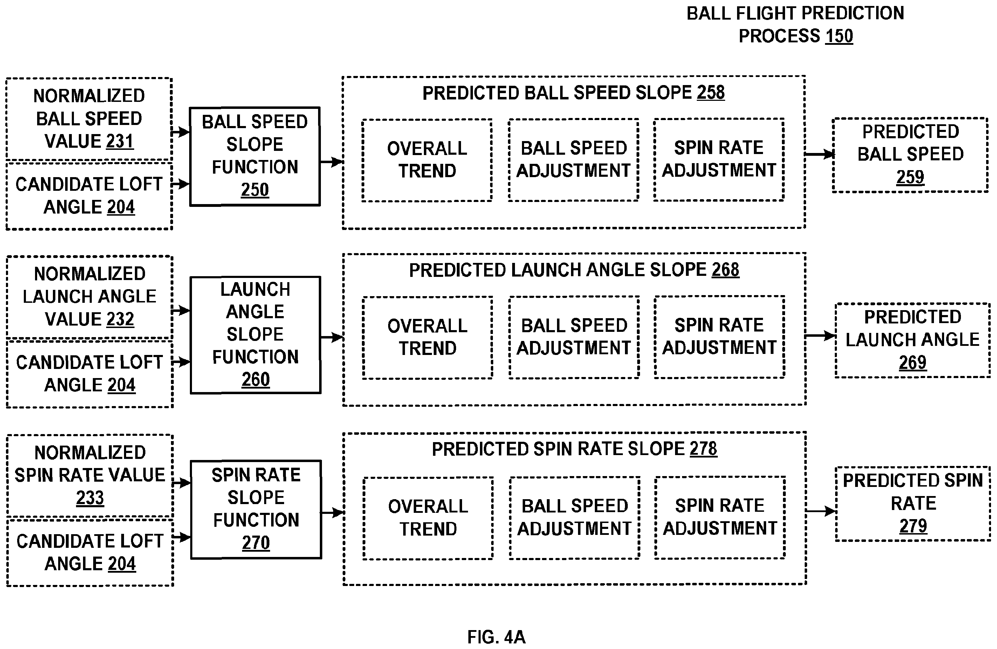

Referring to FIG. **4A**, the ball flight prediction process **150** can include a ball speed slope function **250**, a launch angle slope function **260**, and a spin rate slope function **270** that respectively determine a predicted ball speed slope **258**, a predicted launch angle slope **268**, and a predicted spin rate slope **278** for a candidate loft angle **204** of a candidate club **202** using the set of reference ball flight characteristics **130** for the individual **101**. The predictive model **106** can then use the predicted ball speed slope **258,** the predicted launch angle slope **268**, and the predicted spin rate slope **278** to respectively determine a predicted ball speed **259**, a predicted launch angle **269**, and a predicted spin rate **279**.

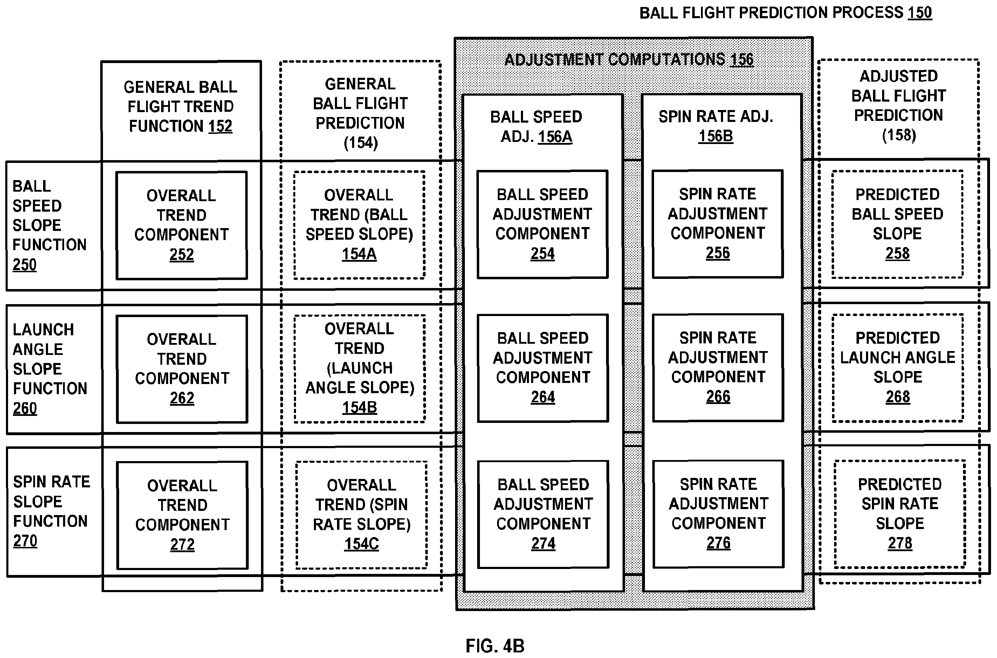

As shown with additional reference to FIG. **4B**, the processor **104** can apply the ball flight trend function **152** to determine the general ball flight predictions **154** including an "overall trend" **154A** for ball speed slope, an "overall trend" **154B** for launch angle slope, and an "overall trend" **154C** for spin rate slope. The ball flight trend function **152** can include an "overall trend component" **252** of the ball speed slope function **250** resulting in the "overall trend" **154A** for ball speed slope, an "overall trend component" **262** of the launch angle slope function **260** resulting in the "overall trend" **154B** for launch angle slope, and an "overall trend component" **272** of the spin rate slope function **270** resulting in the "overall trend" **154C** for spin rate slope. In particular, to determine the predicted ball flight characteristics **134**, the processor **104** can apply the ball flight trend function **152** to determine the "overall trend" **154A** associated with ball speed per degree change in club head loft angle, the "overall trend" **154B** associated with launch angle per degree change in club head loft angle, and the "overall trend" component **154C** associated with spin rate per degree change in club head loft angle. The ball flight trend function **152** can be further derived from a large dataset (e.g., dataset **153**) that includes ball flight data observed and collected from a wide variety of "gapping tests." In such a gapping test, a golfer strikes several shots with various clubs in a golf club set each having different loft angles. From the ball flight data obtained through a wide variety gapping tests, general relationships are determined between loft angle and ball flight characteristics for a typical player to determine the general ball flight trend function **152**. The ball flight trend function **152** can be applied by the processor **104** to the set of reference ball flight characteristics **130** to produce the general ball flight predictions **154** for various candidate clubs **202**, which serves as a baseline to approximate ball flight characteristic values expected for different candidate clubs **202**.

In many cases, the relationship between each ball flight characteristic and loft angle can be characterized as the expected change in a value of a ball flight characteristic per one-degree change in loft (e.g., a ball speed slope, a launch angle slope, and a spin rate slope). In most cases, the change in value of each ball flight characteristic varies with respect to different loft angle ranges. For example, the expected change in ball speed between a 34 degree club and a 35 degree club can be significantly higher or lower than the expected change in ball speed between a 59 degree club and a 60 degree club. The ball flight trend function **152** accounts for such discrepancies. At every possible loft angle, the ball flight trend function **152** accounts for the expected change in a given ball flight characteristic per degree change in loft. The processor **104** executes the ball flight trend function **152** to using as input the reference ball flight characteristics **130** to generate the general ball flight prediction **154** for a plurality of candidate clubs **202**.

Stated another way, the ball flight trend function **152** leverages the predetermined ball flight relationships described herein in view of the reference ball flight characteristics **130** of the reference club **126** to generate general predictions for ball speed, spin rate, launch angle, and/or other ball flight characteristics (e.g., an "overall trend component") defined by the general ball flight prediction **154**. For example, for any given spin rate associated with the reference club (first) dataset, a general spin rate prediction can be determined for any candidate loft angle. The "overall trend" relating change in spin rate to change in loft angle can be applied by the processor **104** to the reference spin rate to determine a general spin rate prediction for each candidate loft angle. The processor **104** can apply the same process to generate a general launch angle prediction and a general ball speed prediction. From such predictions, the processor **104** can determine general predictions for other ball flight characteristics such as carry distance and total distance. The process employed by the processor **104** for generating general predictions for ball speed, spin rate, and launch angle is described in greater detail in following sections.

### Ball Flight Characteristic Adjustments

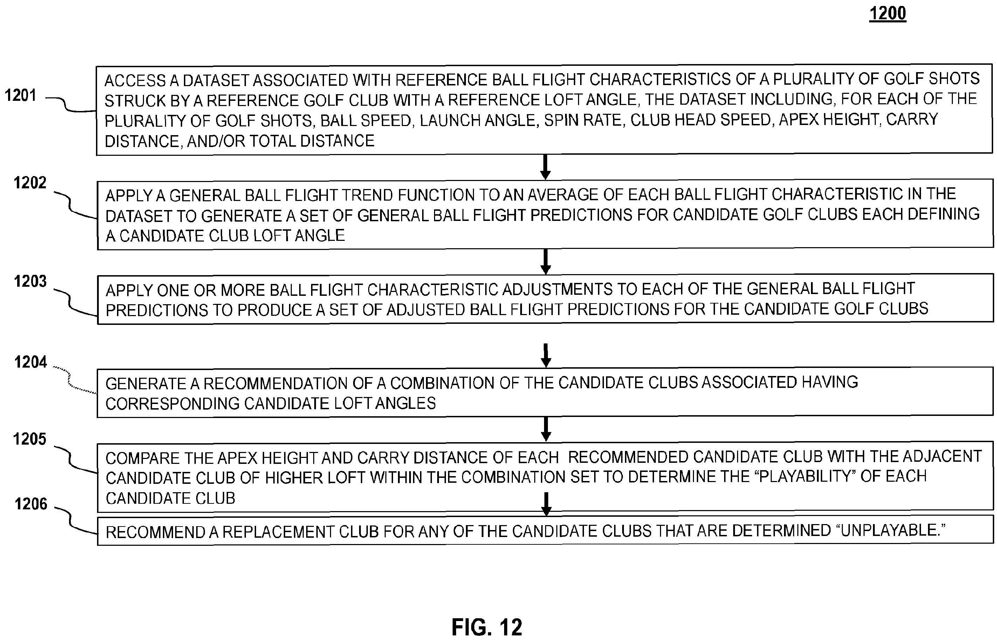

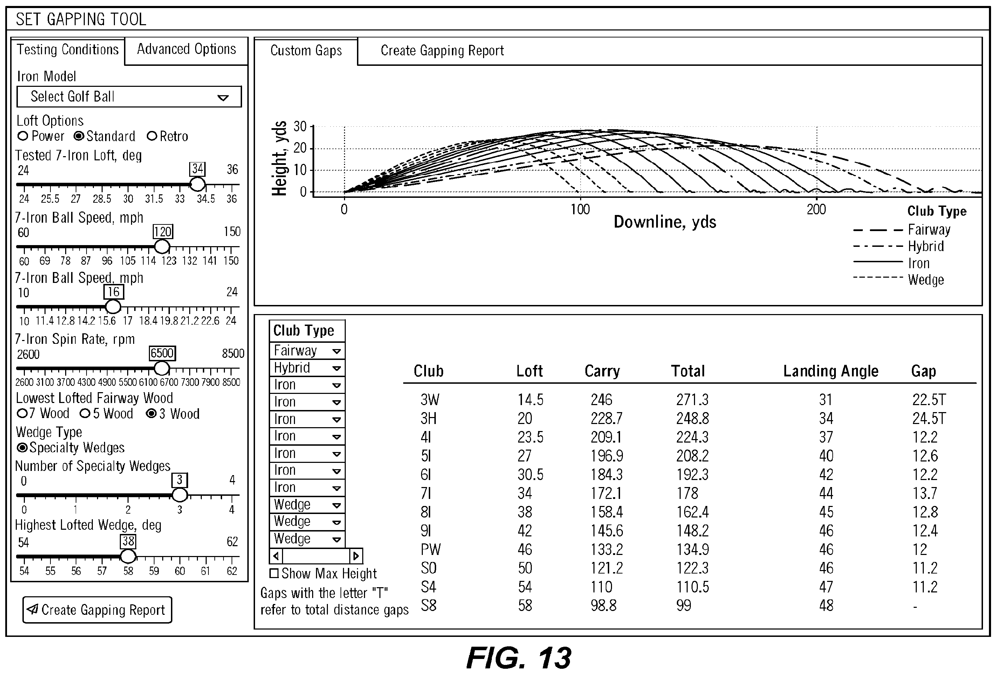

The general ball flight prediction **154** can provide an accurate prediction for the ball flight characteristics for the average player given the ball flight data from the reference club **126**. However, for players whose ball speed or spin rate deviate from that of the average player, the relationships between loft angle and each ball flight characteristic can be drastically different than those of the typical player. For example, players having an above average spin rate at a given loft angle might expect a more drastic change in ball speed, spin rate, and/or launch angle per degree loft than players with an average spin rate. Similarly, players having an above average ball speed at a given loft angle might expect a more drastic change in ball speed, spin rate, and/or launch angle per degree loft than players with an average ball speed. Therefore, the general ball flight prediction **154** alone may not be a sufficiently accurate estimate of the ball flight characteristics of every candidate club **202** for every player. To account for such discrepancies, as illustrated in block **903** of FIG. **9**, the processor **104** can further apply one or more ball flight characteristic adjustment computations **156** (also referred to herein as one or more adjustments) to the general ball flight prediction **154** result to produce an adjusted ball flight prediction **158** for each candidate club **202** for a specific player. Example screenshots of a user interface (UI) driven by the processor **104** generating a plurality of predicted ball flight metrics for candidates clubs **202** is shown in FIGS. 12 and 13.

In many examples, as further shown in FIG. 4B, the plurality of ball flight characteristic adjustment computations **156** include a ball speed adjustment **156A** and a spin rate adjustment **156B** that account for the effect on each ball flight characteristic (e.g., ball speed, spin rate, launch angle, etc.) due to the deviation from a baseline ball speed and a baseline spin rate, respectively. The baseline ball speed and a baseline spin rate can respectively represent an average ball speed and an average spin rate that are observed over a plurality of players. The processor **104** can apply the ball speed adjustment **156A** and the spin rate adjustment **156B** to the overall gapping trends to account for the effect of abnormal ball speed and spin rate on the relationships between each of a) loft angle and spin rate, b) loft angle and ball speed, and c) loft angle and launch angle. For example, the processor **104** can apply both the ball speed adjustment **156A** and the spin rate adjustment **156B** to a general spin rate prediction (e.g.., the "overall trend" **154C** for spin rate slope) to produce an adjusted spin rate prediction (e.g., the predicted spin rate slope **278**), because both an abnormal (i.e., above or below average) ball speed and an abnormal spin rate will influence the relationship between spin rate and loft angle. In some cases, the reference ball flight characteristics **130** for the given individual **101** may exhibit an abnormal spin rate and a normal (e.g., approximately average) ball speed. In this case, the ball speed adjustment **156A** will be negligible. In other cases, the reference ball flight characteristics **130** for the given individual **101** may exhibit a normal spin rate and an abnormal ball speed. In this case, the spin rate adjustment **156B** will be negligible.

The processor **104** applies the ball speed adjustment **156A** based on the normalized ball speed recorded from the reference ball flight data **120**. The ball speed adjustment **156A** takes into account the effect abnormal ball speeds have on the predicted ball flight characteristics **134** of the candidate clubs **202**. An abnormal ball speed impacts the rate of change of ball speed, spin rate, and launch angle per degree change in loft angle. Generally, the severity of the ball speed adjustment **156A** is proportional to the abnormality of the normalized ball speed measured from the reference club **126** relative to the baseline ball speed. For example, at a particular loft angle, the general ball flight prediction **154** might expect a spin rate increase of 200 rpm per degree increase in loft angle. At the same loft angle, a first player with a reference club ball speed that is 1 mph above average might expect a spin rate increase of 210 rpm per degree increase in loft angle, while a second player with a reference club ball speed that is 2 mph above average might expect a spin rate increase of 220 rpm per degree increase in loft angle. In this situation, the ball speed adjustment at the particular loft angle for the first player would be 10 rpm per degree loft while the ball speed adjustment for the second player would be 20 rpm per degree loft. Similarly, at the same loft angle, a third player having a reference club ball speed that is 1 mph below average would expect to see an increase of 190 rpm per degree increase in loft angle (a ball speed adjustment of -10 rpm per degree). The processor **104** can similarly apply the ball speed adjustment **156A** to determine the change in launch angle per degree loft for a particular player as well as the change in ball speed per degree loft for a particular player.

Similarly, the processor **104** can apply the spin rate adjustment **156B** based on the normalized spin rate recorded from the reference ball flight data **120**. The spin rate adjustment **156B** takes into account the effect abnormal spin rates have on the predicted ball flight characteristics **134** of the candidate clubs **202**. An abnormal spin rate as measured from the reference club impacts the rate of change of ball speed, spin rate, and launch angle per degree change in loft angle. Generally, the severity of the spin rate adjustment **156B** is proportional to the abnormality of the normalized spin rate measured from the reference club **126** relative to the baseline spin rate. For example, at a particular loft angle, the overall gapping trend might expect a ball speed increase of 1 mph per degree increase in loft angle. At the same loft angle, a first player with a reference club spin rate that is 2000 rpm above average might expect a ball speed increase of 0.9 mph per degree increase in loft angle, while a second player with a reference club spin rate that is 4000 rpm above average might expect a ball speed increase of 0.8 mph per degree increase in loft angle. In this situation, the spin rate adjustment for the first player would be -0.1 mph per degree loft while the spin rate adjustment for the second player would be -0.2 mph per degree loft. Similarly, at the same loft angle, a third player having a spin rate 2000 rpm below average would expect to see a ball speed increase of 1.1 mph per degree increase in loft angle (a spin rate adjustment of 0.1 mph per degree loft). The processor **104** can similarly apply the spin rate adjustment **156B** to determine the change in launch angle per degree loft for a particular player as well as the change in spin rate per degree loft for a particular player.

In many instances, a player's reference ball flight data **120** may exhibit both an abnormal ball speed and an abnormal spin rate, in which case the processor **104** applies both the ball speed adjustment **156A** and the spin rate adjustment **156B** to the general ball flight prediction **154** to produce the adjusted ball flight prediction **158**. Ball speed and spin rate work independently to influence each ball flight characteristic, however the combined effect of an abnormal ball speed and an abnormal spin rate on a given ball flight characteristic can be determined by simple addition of each respective ball flight characteristic adjustment. For example, if the ball speed adjustment as applied to the spin rate for a particular loft angle is 220 rpm per degree loft and the spin rate adjustment as applied to the spin rate for the same loft angle is 100 rpm per degree loft, then the total adjustment applied to the spin rate is 320 rpm per degree loft. Similarly, if the ball speed adjustment as applied to the spin rate for a particular loft angle is 100 rpm per degree loft and the spin rate adjustment as applied to the spin rate for the same loft angle is -200 rpm per degree loft, then the total adjustment applied to the spin rate is -100 rpm per degree loft.

The adjustment computations **156** as applied to the general ball flight predictions **154** can increase accuracy associated with estimation of the ball speed, spin rate, launch angle, and/or other ball flight characteristics of various candidate clubs **202**. From the adjusted ball flight predictions **158**, the processor **104** can produce an accurate prediction of the carry distance and/or total distance of each potential candidate club **202** that may be recommended or selected for use in a golf club set for the individual **101**.

### Generating the Predicted Ball Flight Characteristics

As discussed above with reference to FIGS. 4A and 4B, the processor **104** is operable to receive the set of reference ball flight characteristics **130** for a ball hit by an individual using the reference club **126** having the reference loft angle, and can predict how flight characteristics of the ball are expected to change if the individual hits the ball using a candidate club **202** having a candidate loft angle **204** based on the set of reference ball flight characteristics **130** obtained using the reference club **126**. The set of reference ball flight characteristics **130** can include the normalized ball speed value and the normalized spin rate value, and can be normalized across more than one sample from the same individual and the same reference club **126**. This section focuses on generation of the set of predicted ball flight characteristics **134** for a candidate club **202** using the set of reference ball flight characteristics **130** measured using the reference club **126**.

Based on the set of reference ball flight characteristics **130** that are observed when the individual hits the ball using the reference club **126**, the processor **104** is operable to determine a set of individual-specific slope values (e.g., the adjusted ball flight predictions **158**) including an expected change in ball speed per degree change in loft angle (e.g., the predicted ball speed slope **258**) using the ball speed slope function **250**, an expected change in launch angle per degree change in loft angle (e.g., the predicted launch angle slope **268**) using the launch angle slope function **260**, and an expected change in spin rate per degree change in loft angle (e.g., the predicted spin rate slope **278**) using the spin rate slope function **270**.

Using these individual-specific slope values (e.g., the predicted ball speed slope **258**, the predicted launch angle slope **268**, and the predicted spin rate slope **278**), the processor **104** can provide the set of predicted ball flight characteristics **134** including the predicted ball speed **259**, the predicted launch angle **269**, and the predicted spin rate **279** for each respective candidate club **202** of the plurality of candidate clubs **202** with knowledge of the candidate loft angle **204** associated with each respective candidate club **202**. In particular:
**1.** Using the predicted ball speed slope **258**, the processor **104** can determine the predicted ball speed **259** for a candidate club **202** having a candidate loft angle **204**.
**2.** Using the predicted launch angle slope **268**, the processor **104** can determine the predicted launch angle **269** for the candidate club **202** having the candidate loft angle **204**.
**3.** Using the predicted spin rate slope **278**, the processor **104** can determine the predicted spin rate **279** for the candidate club **202** having the candidate loft angle **204**.

In one aspect, the processor **104** can generate the set of individual-specific slope values for the candidate club **202** by input of the set of reference ball flight characteristics **130** as normalized and the candidate loft angle **204** to the ball flight trend function **152** configured to predict changes in ball flight based upon predetermined correlations between loft angle and the ball flight characteristics (e.g., by determining the "overall trend" **154A** of predicted ball speed slope **258**, the "overall trend" **154B** of predicted launch angle slope **268**, and the "overall trend" **154C** of predicted spin rate slope **278**).

The processor **104** can then adjust the set of individual-specific slope values for the candidate club **202** by application of output from one or more adjustment computations **156** (that yield the adjusted ball flight predictions **158**) that adjust for deviation of one or more of the set of reference ball flight characteristics **130** of the individual from a predetermined threshold (e.g., a baseline value including a baseline ball speed value **222** and a baseline spin rate value **224** for the reference club **126**) the one or more adjustment computations **156** increasing computed-prediction accuracy by accounting for player-specific discrepancies. By way of example, these one or more adjustment computations **156** can include the "ball speed adjustment" **156A** and the "spin rate adjustment" **156B** for each individual-specific slope value of the set of individual-specific slope values (e.g., including a "ball speed adjustment component" **254** and a "spin rate adjustment component" **264** for the predicted ball speed slope **258**, a "ball speed adjustment component" **264** and a "spin rate adjustment component" **266** for the predicted launch angle slope **268**, and a "ball speed adjustment component" **276** and a "spin rate adjustment component" **278** for the predicted spin rate slope **278**).

The set of individual-specific slope values for each respective predicted ball flight characteristic of the set of predicted ball flight characteristics **134** can then be consolidated or combined into a total individual-specific slope value (e.g., the predicted ball speed slope **258**, the predicted launch angle slope **268**, and the predicted spin rate slope **278**) for each respective predicted ball flight characteristic of the set of predicted ball flight characteristics **134**.

For instance, the set of individual-specific slope values for the predicted ball speed slope **258** can include the "overall trend" component **154A** of predicted ball speed slope, the "ball speed adjustment" component **254** of predicted ball speed slope, and the "spin rate adjustment" component **256** of predicted ball speed slope, and the set of individual-specific slope values for the predicted ball speed slope can be combined to yield the total individual-specific slope value (e.g., the predicted ball speed slope **258**) for the predicted ball speed. The predicted ball speed slope **258** can then be used to determine the predicted ball speed **259** of the set of predicted ball flight characteristics **134**.

Similarly, the set of individual-specific slope values for the predicted launch angle slope **268** can include the "overall trend" component **154B** of predicted launch angle slope, the "ball speed adjustment" component **264** of predicted launch angle slope, and the "spin rate adjustment" component **266** of predicted launch angle slope, and the set of individual-specific slope values for the predicted launch angle can be combined to yield the total individual-specific slope value (e.g., the predicted launch angle slope **268**) for the predicted launch angle. The predicted launch angle slope **268** can then be used to determine the predicted launch angle **269**. Likewise, the set of individual-specific slope values for the predicted spin rate slope **278** can include the "overall trend" component **154C** of predicted spin rate slope, the "ball speed adjustment" component **274** of predicted spin rate slope, and the "spin rate adjustment" component **276** of predicted spin rate slope, and the set of individual-specific slope values for the predicted spin rate can be combined to yield the total individual-specific slope value (e.g., the predicted spin rate slope **278**) for the predicted spin rate. The predicted spin rate slope **278** can then be used to determine the predicted spin rate **279** of the set of predicted ball flight characteristics **134**.

As mentioned above, the processor **104** can then determine the predicted ball speed **259** for a candidate club **202** having a candidate loft angle **204** using the predicted ball speed slope **258** as adjusted and a difference in loft angle between the reference loft angle **206** and the candidate loft angle **204**. Similarly, the processor **104** can determine the predicted launch angle **269** for the candidate club **202** having the candidate loft angle **204** using the predicted launch angle slope **268** as adjusted and a difference in loft angle between the reference loft angle **206** and the candidate loft angle **204**. Likewise, the processor **104** can determine the predicted spin rate **279** for the candidate club **202** having the candidate loft angle **204** using the predicted spin rate slope **278** as adjusted and a difference in loft angle between the reference loft angle **206** and the candidate loft angle **204**.

The processor **104** can iteratively repeat this process for each candidate club **202** of the plurality of candidate clubs **202** each having different candidate loft angles **204**, and can collect the set of predicted ball flight characteristics **134** for the individual over the plurality of candidate clubs **202**. Based on the set of predicted ball flight characteristics **134**, the processor **104** can select an optimal set of recommended clubs **136** from the plurality of candidate clubs **202** for the individual that result in an optimal set of predicted ball flight characteristics **134**.

### A. Ball Speed Slope Function

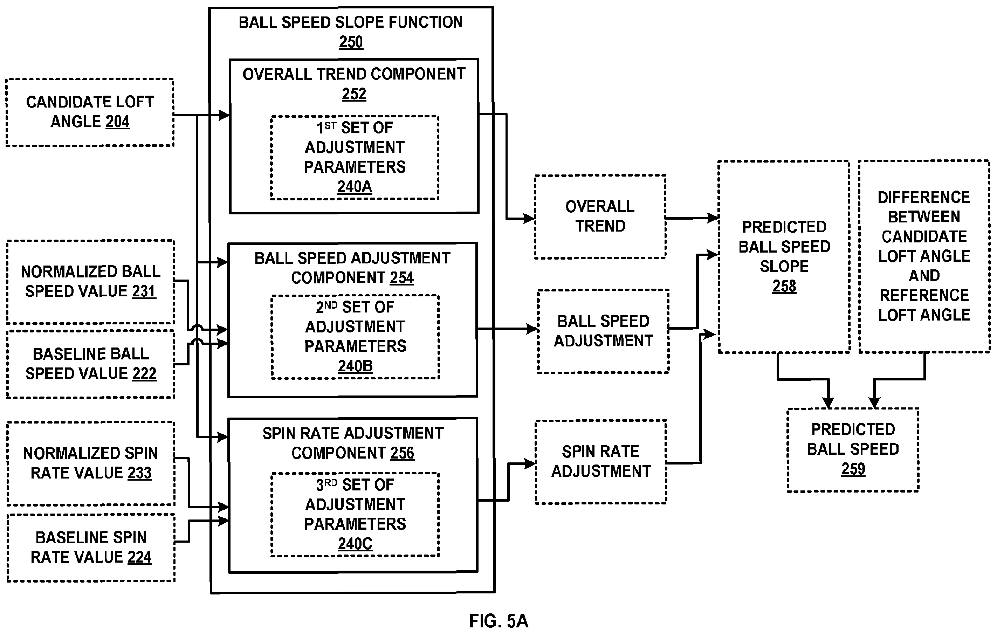

With reference to FIG. 5A, the ball speed slope function **250** evaluated by the processor **104** for each candidate club **202** is indicative of the expected change in ball speed per degree change in loft angle that is specific to the individual, and includes an overall trend component **252**, a ball speed adjustment component **254**, and a spin rate adjustment component **256**. The overall trend component **252** is indicative of an "overall trend" in rate of change of ball speed per degree change in loft angle, and is determined based on the candidate loft angle **204** of the candidate club **202**. The ball speed adjustment component **254** is also determined based on the candidate loft angle **204** of the candidate club **202** and incorporates the normalized ball speed value **231** associated with the individual for the reference club **126** with respect to the baseline ball speed value **222** for the reference club **126**. The spin rate adjustment component **256** is also determined based on the candidate loft angle **204** of the candidate club **202** and incorporates the normalized spin rate value **233** associated with the individual for the reference club **126** with respect to a baseline spin rate value **224** for the reference club **126**.

### i) Ball Speed Slope Function: Overall Trend Component

The processor **104** evaluates the overall trend component **252** of the ball speed slope function **250** based on the candidate loft angle **204** of the candidate club **202**, and incorporates a first set of adjustment parameters **240A** that are selected based on a classification range of the candidate loft angle **204** of the candidate club **202** (e.g., based on a range of candidate loft angle values that the candidate loft angle **204** falls into). In particular, the processor **104** selects values for the first set of adjustment parameters **240A** from a total set of parameter values **240** stored in the memory **108** in communication with the processor **104**; these values can be empirically determined and can be optimized for accuracy using data obtained through many reference flights. The processor **104** can use any number of classification ranges to assign the first set of adjustment parameters **240A** in order to yield accurate results, and the classification ranges and values of the first set of adjustment parameters **240A** can be unique to the overall trend component **252** of the ball speed slope function **250**. For example, if the candidate loft angle **204** of the candidate club **202** falls within an *n^{th}* classification range, then the processor **104** selects an *n^{th}* set of values from the total set of parameter values for the first set of adjustment parameters **240A**.

In one example, the processor **104** can evaluate the overall trend component **252** of the ball speed slope function **250** using the candidate loft angle **204** of the candidate club **202** as input, with the first set of adjustment parameters **240A** of the overall trend component **252** being selected based on the classification range of the candidate loft angle **204** of the candidate club **202**.

### ii) Ball Speed Slope Function: Ball Speed Adjustment Component

The processor **104** evaluates the ball speed adjustment component **254** of the ball speed slope function **250** based on the candidate loft angle **204** of the candidate club **202** and based on the normalized ball speed value **231** associated with the individual **101** for the reference club **126**. In particular, the ball speed adjustment component **254** incorporates the normalized ball speed value **231** associated with the individual **101** for the reference club **126** with respect to the baseline ball speed value **222** for the reference club **126** to yield a relative ball speed change value. When evaluating the ball speed adjustment component **254**, the processor **104** combines the relative ball speed change value with a loft angle adjustment value that is determined in a manner similar to the overall trend component **252** using a second set of adjustment parameters **240B**.

Similar to the overall trend component **252**, to determine the loft angle adjustment value of the ball speed adjustment component **254**, the processor **104** similarly incorporates the second set of adjustment parameters **240B** that are selected based on a classification range of the candidate loft angle **204** of the candidate club **202** (e.g., based on a range of candidate loft angle values that the candidate loft angle **204** falls into). In particular, the processor **104** selects values for the second set of adjustment parameters **240B** from the total set of parameter values **240** stored in the memory **108** in communication with the processor **104**; these values can be empirically determined and can be optimized for accuracy using data obtained through many reference flights. The processor **104** can use any number of classification ranges to assign the second set of adjustment parameters **240B** in order to yield accurate results, and the classification ranges and values of the second set of adjustment parameters **240B** can be unique to the ball speed adjustment component **254** of the ball speed slope function **250** for the loft angle adjustment value of the ball speed adjustment component **254**, and can also can be different from those considered when evaluating the overall trend component **252**.

In one example, the processor **104** can evaluate the ball speed adjustment component **254** of the ball speed slope function **250** using the normalized ball speed value **231** and the candidate loft angle **204** of the candidate club **202** as input, with the second set of adjustment parameters **240B** of the ball speed adjustment component **254** being selected based on the classification range of the candidate loft angle **204** of the candidate club **202**.

### iii) Ball Speed Slope Function: Spin Rate Adjustment Component

The processor **104** evaluates the spin rate adjustment component **256** of the ball speed slope function **250** based on the candidate loft angle **204** of the candidate club **202** and based on the normalized spin rate value **233** associated with the individual **101** for the reference club **126**. In particular, the spin rate adjustment component **256** incorporates the normalized spin rate value **233** associated with the individual **101** for the reference club **126** with respect to the baseline spin rate value **224** for the reference club **126** to yield a relative spin rate change value. When evaluating the spin rate adjustment component **256**, the processor **104** combines the relative spin rate change value with a loft angle adjustment value that is determined in a manner similar to the overall trend component **252** using a third set of adjustment parameters **240C**.

Similar to the overall trend component **252**, to determine the loft angle adjustment value of the spin rate adjustment component **256**, the processor **104** similarly incorporates a third set of adjustment parameters **240C** that may or may not be selected based on a classification range of the candidate loft angle **204** of the candidate club **202** (e.g., based on a range of candidate loft angle values that the candidate loft angle **204** falls into). In particular, the processor **104** selects values for the third set of adjustment parameters **240C** from the total set of parameter values **240** stored in the memory **108** in communication with the processor **104**; these values can be empirically determined and can be optimized for accuracy using data obtained through many reference flights. The processor **104** can use any number of classification ranges to assign the third set of adjustment parameters **240C** in order to yield accurate results, and the classification ranges and values of the third set of adjustment parameters **240C** can be unique to the spin rate adjustment component **256** of the ball speed slope function **250**. However, note that in some embodiments, the processor **104** may not consider a classification range, and may instead use pre-selected values for the third set of adjustment parameters **240C** regardless of the value of the candidate loft angle **204**.

In one example, the processor **104** can evaluate the spin rate adjustment component **256** of the ball speed slope function **250** using the normalized spin rate value **233** and the candidate loft angle **204** of the candidate club **202** as input and using the third set of adjustment parameters **240C**.

### iv) Determining Predicted Ball Speed using Ball Speed Slope

The processor **104** then combines the results of the overall trend component **252**, the ball speed adjustment component **254** and the spin rate adjustment component **256** yielding the predicted ball speed slope **258** for the candidate club **202**.

The processor **104** can then use the predicted ball speed slope **258** to determine the predicted ball speed **259** for the candidate club **202** having the candidate loft angle **204**. First, the processor **104** can determine a difference in loft angle between the candidate loft angle **204** and the reference loft angle **206** yielding a loft angle difference. To determine the predicted ball speed, the processor **104** can take the product of the loft angle difference and the predicted ball speed slope to yield the predicted ball speed **259** for the candidate club **202** having the candidate loft angle **204**.

### B. Launch Angle Slope Function

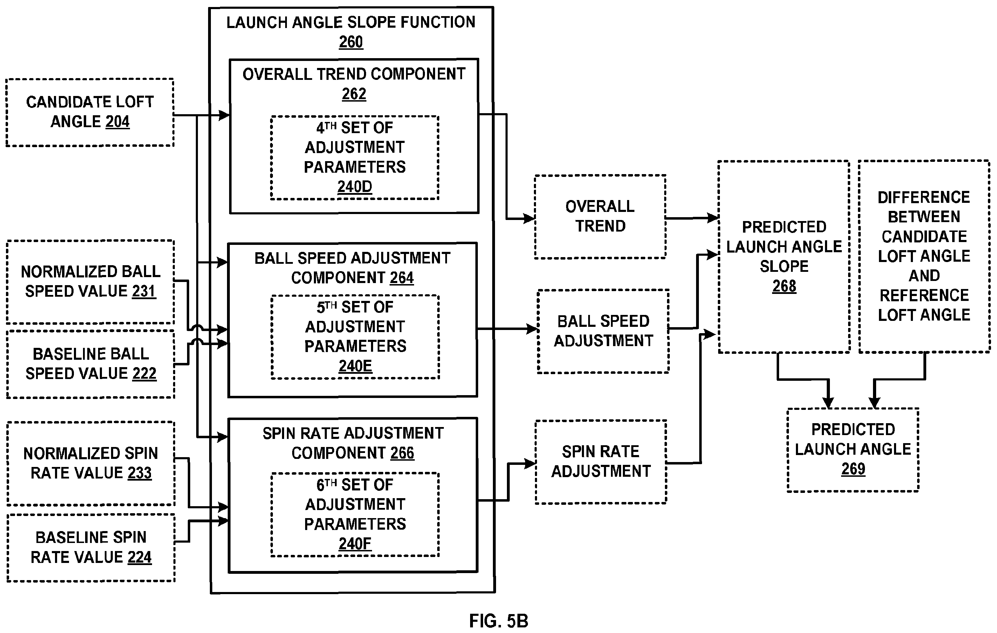

Referring to FIG. 5B, the processor **104** can apply a similar process to determine the predicted launch angle slope **268** for a candidate club **202** using the launch angle slope function **260**.

The launch angle slope function **260** evaluated by the processor **104** for each candidate club **202** is indicative of the expected change in launch angle per degree change in loft angle that is specific to the individual, and includes an overall trend component **262**, a ball speed adjustment component **264**, and a spin rate adjustment component **266**. The overall trend component **262** is indicative of an "overall trend" in rate of change of launch angle per degree change in loft angle, and is determined based on the candidate loft angle **204** of the candidate club **202**. The ball speed adjustment component **264** is also determined based on the candidate loft angle **204** of the candidate club **202** and incorporates the normalized ball speed value **231** associated with the individual **101** for the reference club **126** with respect to the baseline ball speed value **222** for the reference club **126**. The spin rate adjustment component **266** is also determined based on the candidate loft angle **204** of the candidate club **202** and incorporates the normalized spin rate value **233** associated with the individual **101** for the reference club **126** with respect to the baseline spin rate value **224** for the reference club **126**.

### i) Launch Angle Slope Function: Overall Trend

The processor **104** evaluates the overall trend component **262** of the launch angle slope function **260** based on the candidate loft angle **204** of the candidate club **202**, and incorporates a fourth set of adjustment parameters **240D** that are selected based on a classification range of the candidate loft angle **204** of the candidate club **202** (e.g., based on a range of candidate loft angle values that the candidate loft angle **204** falls into). In particular, the processor **104** selects values for the fourth set of adjustment parameters **240D** from the total set of parameter values **240** stored in the memory **108** in communication with the processor **104**; these values can be empirically determined and can be optimized for accuracy using data obtained through many reference flights. The processor **104** can use any number of classification ranges to assign the fourth set of adjustment parameters **240D** in order to yield accurate results, and the classification ranges and values of the fourth set of adjustment parameters **240D** can be unique to the overall trend component **262** of the launch angle slope function **260**.

In one example, the processor **104** can evaluate the overall trend component **262** of the launch angle slope function **260** using the candidate loft angle **204** of the candidate club **202** as input, with the fourth set of adjustment parameters **240D** of the overall trend component **262** being selected based on the classification range of the candidate loft angle **204** of the candidate club **202**.

### ii) Launch Angle Slope Function: Ball Speed Adjustment Component

The processor **104** evaluates the ball speed adjustment component **264** of the launch angle slope function **260** based on the candidate loft angle **204** of the candidate club **202** and based on the normalized ball speed value **231** associated with the individual **101** for the reference club **126**. In particular, the ball speed adjustment component **264** incorporates the normalized ball speed value **231** associated with the individual **101** for the reference club **126** with respect to the baseline ball speed value **222** for the reference club **126** to yield a relative ball speed change value. When evaluating the ball speed adjustment component **264** of the launch angle slope function **260**, the processor **104** combines the relative ball speed change value with a loft angle adjustment value that is determined in a manner similar to the loft angle adjustment value of the ball speed adjustment component **254** of the ball speed slope function **250** using a fifth set of adjustment parameters **240E**.

Similar to the ball speed adjustment component **254** of the ball speed slope function **250**, to determine the loft angle adjustment value of the ball speed adjustment component **264** of the launch angle slope function **260**, the processor **104** similarly incorporates the fifth set of adjustment parameters **240E** that are selected based on a classification range of the candidate loft angle **204** of the candidate club **202** (e.g., based on a range of candidate loft angle values that the candidate loft angle **204** falls into). In particular, the processor **104** selects values for the fifth set of adjustment parameters **240E** from the total set of parameter values **240** stored in the memory **108**; these values can be empirically determined and can be optimized for accuracy using data obtained through many reference flights. The processor **104** can use any number of classification ranges to assign the fifth set of adjustment parameters **240E** in order to yield accurate results, and the classification ranges and values of the fifth set of adjustment parameters **240E** can be unique to the ball speed adjustment component **264** of the launch angle slope function **260**.

In one example, the processor **104** can evaluate the ball speed adjustment component **264** of the launch angle slope function **260** using the normalized ball speed value **231** and the candidate loft angle **204** of the candidate club **202** as input, with the fifth set of adjustment parameters **240E** of the ball speed adjustment component **264** being selected based on the classification range of the candidate loft angle **204** of the candidate club **202**.

### iii) Launch Angle Slope Function: Spin Rate Adjustment Component

The processor **104** evaluates the spin rate adjustment component **266** of the launch angle slope function **260** based on the candidate loft angle **204** of the candidate club **202** and based on the normalized spin rate value **233** associated with the individual **101** for the reference club **126**. In particular, the spin rate adjustment component **266** incorporates the normalized spin rate value **233** associated with the individual **101** for the reference club **126** with respect to the baseline spin rate value **224** for the reference club **126** to yield a relative spin rate change value. When evaluating the spin rate adjustment component **266**, the processor **104** combines the relative spin rate change value with a loft angle adjustment value that is determined in a manner similar to the loft angle adjustment value of the spin rate adjustment component **256** of the ball speed slope function **250** using a sixth set of adjustment parameters **240F**.

Similar to the spin rate adjustment component **256** of the ball speed slope function **250**, to determine the loft angle adjustment value of the spin rate adjustment component **266** of the launch angle slope function **260**, the processor **104** similarly incorporates the sixth set of adjustment parameters **240F** that are selected based on a classification range of the candidate loft angle **204** of the candidate club **202** (e.g., based on a range of candidate loft angle values that the candidate loft angle **204** falls into). In particular, the processor **104** selects values for the sixth set of adjustment parameters **240F** from the total set of parameter values **240** stored in the memory **108** in communication with the processor **104**; these values can be empirically determined and can be optimized for accuracy using data obtained through many reference flights. The processor **104** can use any number of classification ranges to assign the sixth set of adjustment parameters **240F** in order to yield accurate results, and the classification ranges and values of the sixth set of adjustment parameters **240F** can be unique to the spin rate adjustment component **266** of the launch angle slope function **260**.

In one example, the processor **104** can evaluate the spin rate adjustment component **266** of the launch angle slope function **260** using the normalized spin rate value **233** and the candidate loft angle **204** of the candidate club **202** as input, with the sixth set of adjustment parameters **240F** of the spin rate adjustment component **266** being selected based on the classification range of the candidate loft angle **204** of the candidate club **202**.

### iv) Determining Predicted Launch Angle using Launch Angle Slope

The processor **104** then combines the results of the overall trend component **262**, the ball speed adjustment component **264** and the spin rate adjustment component **266** yielding the predicted launch angle slope **268** for the candidate club **202**.

The processor **104** can then use the predicted launch angle slope **268** to determine the predicted launch angle **269** for the candidate club **202** having the candidate loft angle **204**. First, the processor **104** considers the difference in loft angle between the candidate loft angle **204** and the reference loft angle **206** yielding the loft angle difference. To determine the predicted launch angle, the processor **104** then multiplies the loft angle difference by the predicted launch angle slope **268** to yield the predicted launch angle **269** for the candidate club **202** having the candidate loft angle **204**.

### C. Spin Rate Slope Function

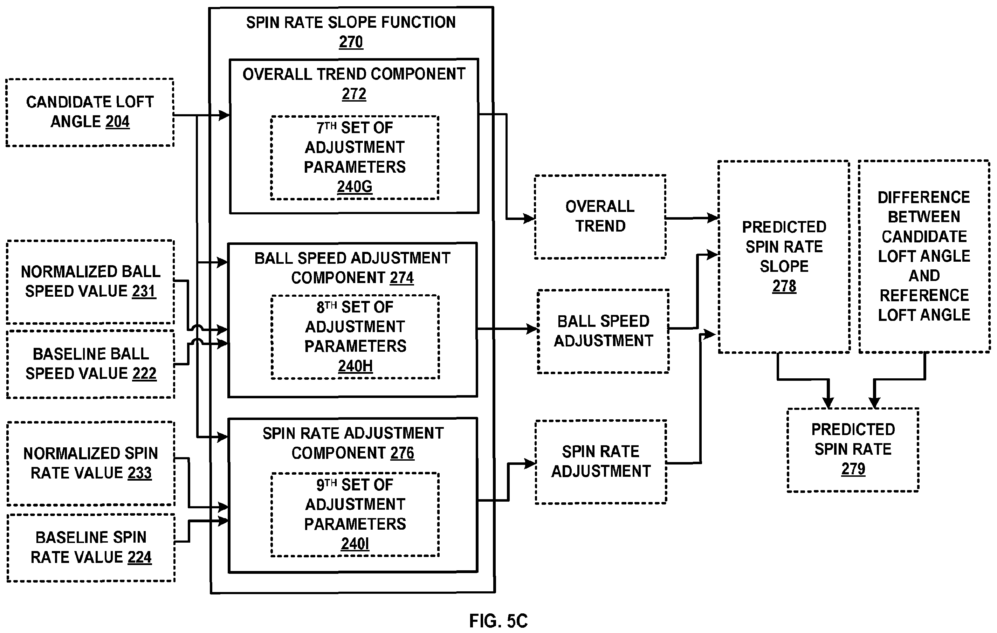

Referring to FIG. 5C, the processor **104** can apply a similar process to determine the predicted spin rate slope **278** for a candidate club **202** using the spin rate slope function **270**.

The spin rate slope function **270** evaluated by the processor **104** for each candidate club **202** is indicative of an expected change in spin rate per degree change in loft angle that is specific to the individual **101**, and includes an overall trend component **272**, a ball speed adjustment component **274**, and a spin rate adjustment component **276**. The overall trend component **272** is indicative of an "overall trend" in rate of change of spin rate per degree change in loft angle, and is determined based on the candidate loft angle **204** of the candidate club **202**. The ball speed adjustment component **274** is also determined based on the candidate loft angle **204** of the candidate club **202** and incorporates the normalized ball speed value **231** associated with the individual **101** for the reference club **126** with respect to the baseline ball speed value **222** for the reference club **126**. The spin rate adjustment component **276** is also determined based on the candidate loft angle **204** of the candidate club **202** and incorporates the normalized spin rate value **233** associated with the individual **101** for the reference club **126** with respect to the baseline spin rate value **224** for the reference club **126**.

### i) Spin Rate Slope Function: Overall Trend Component

The processor **104** evaluates the overall trend component **272** of the spin rate slope function **270** based on the candidate loft angle **204** of the candidate club **202**, and incorporates a seventh set of adjustment parameters **240G** that are selected based on a classification range of the candidate loft angle **204** of the candidate club **202** (e.g., based on a range of candidate loft angle values that the candidate loft angle **204** falls into). In particular, the processor **104** selects values for the seventh set of adjustment parameters **240G** from the total set of parameter values **240** stored in the memory **108** in communication with the processor **104**; these values can be empirically determined and can be optimized for accuracy using data obtained through many reference flights. The processor **104** can use any number of classification ranges to assign the seventh set of adjustment parameters **240G** in order to yield accurate results, and the classification ranges and values of the seventh set of adjustment parameters **240G** for the overall trend component **272** of the spin rate slope function **270** can be unique to the overall trend component **272** of the spin rate slope function **270**.

In one example, the processor **104** can evaluate the overall trend component **272** of the spin rate slope function **270** using the candidate loft angle **204** of the candidate club **202** as input, with the seventh set of adjustment parameters **240G** of the overall trend component **272** being selected based on the classification range of the candidate loft angle **204** of the candidate club **202**.

### ii) Spin Rate Slope Function: Ball Speed Adjustment Component

The processor **104** evaluates the ball speed adjustment component **274** of the spin rate slope function **270** based on the candidate loft angle **204** of the candidate club **202** and based on the normalized ball speed value **231** associated with the individual **101** for the reference club **126**. In particular, the ball speed adjustment component **274** incorporates the normalized ball speed value **231** associated with the individual **101** for the reference club **126** with respect to the baseline ball speed value **222** for the reference club **126** to yield a relative ball speed change value. When evaluating the ball speed adjustment component **274** of the spin rate slope function **270**, the processor **104** combines the relative ball speed change value with a loft angle adjustment value that is determined in a manner similar to the loft angle adjustment value of the ball speed adjustment component **254** of the ball speed slope function **250** and the loft angle adjustment value of the ball speed adjustment component **264** of the launch angle slope function **260** using an eighth set of adjustment parameters **240H**.

Similar to the ball speed adjustment component **254** of the ball speed slope function **250** and the ball speed adjustment component **264** of the launch angle slope function **260**, to determine the loft angle adjustment value of the ball speed adjustment component **274** of the spin rate slope function **270**, the processor **104** similarly incorporates the eighth set of adjustment parameters **240G** that are selected based on a classification range of the candidate loft angle **204** of the candidate club **202** (e.g., based on a range of candidate loft angle values that the candidate loft angle **204** falls into). In particular, the processor **104** selects values for the eighth set of adjustment parameters **240G** from the total set of parameter values **240** stored in the memory **108** in communication with the processor **104**; these values can be empirically determined and can be optimized for accuracy using data obtained through many reference flights. The processor **104** can use any number of classification ranges to assign the eighth set of adjustment parameters **240G** in order to yield accurate results, and the classification ranges and values of the eighth set of adjustment parameters **240G** can be unique to the ball speed adjustment component **274** of the spin rate slope function **270**.

In one example, the processor **104** can evaluate the ball speed adjustment component **274** of the spin rate slope function **270** using the normalized ball speed value **231** and the candidate loft angle **204** of the candidate club **202** as input, with the eighth set of adjustment parameters **240G** of the ball speed adjustment component **274** being selected based on the classification range of the candidate loft angle **204** of the candidate club **202**.

### iii) Spin Rate Slope Function: Spin Rate Adjustment Component

The processor **104** evaluates the spin rate adjustment component **276** of the spin rate slope function **270** based on the candidate loft angle **204** of the candidate club **202** and based on the normalized spin rate value **233** associated with the individual **101** for the reference club **126**. In particular, the spin rate adjustment component 276 incorporates the normalized spin rate value **233** associated with the individual **101** for the reference club **126** with respect to the baseline spin rate value **224** for the reference club **126** to yield a relative spin rate change value. When evaluating the spin rate adjustment component **276**, the processor **104** combines the relative spin rate change value with a loft angle adjustment value that is determined in a manner similar to the loft angle adjustment value of the spin rate adjustment component **256** of the ball speed slope function **250** and the loft angle adjustment value of the spin rate adjustment component **266** of the launch angle slope function **260** using a ninth set of adjustment parameters **240I**.

Similar to the spin rate adjustment component **256** of the ball speed slope function **250** and the spin rate adjustment component **266** of the launch angle slope function **260**, to determine the loft angle adjustment value of the spin rate adjustment component **276** of the spin rate slope function **270**, the processor **104** similarly incorporates the ninth set of adjustment parameters **240I** that are selected based on a classification range of the candidate loft angle **204** of the candidate club **202** (e.g., based on a range of candidate loft angle values that the candidate loft angle **204** falls into). In particular, the processor **104** selects values for the ninth set of adjustment parameters **240I** from the total set of parameter values **240** stored in the memory **108** in communication with the processor **104**; these values can be empirically determined and can be optimized for accuracy using data obtained through many reference flights. The processor **104** can use any number of classification ranges to assign the ninth set of adjustment parameters **240I** in order to yield accurate results, and the classification ranges and values of the ninth set of adjustment parameters **240I** can be unique to the spin rate adjustment component **276** of the spin rate slope function **170**.

In one example, the processor **104** can evaluate the spin rate adjustment component **276** of the spin rate slope function **270** using the normalized spin rate value **233** and the candidate loft angle **204** of the candidate club **202** as input, with the ninth set of adjustment parameters **240I** of the spin rate adjustment component **276** being selected based on the classification range of the candidate loft angle **204** of the candidate club **202**.

### iv) Determining Predicted Spin Rate using Spin Rate Slope

The processor **104** then combines the results of the overall trend component **272**, the ball speed adjustment component **274** and the spin rate adjustment component **276** yielding the predicted spin rate slope **278** for the candidate club **202**.

The processor **104** can then use the predicted spin rate slope **278** to determine the predicted spin rate **279** for the candidate club **202** having the candidate loft angle **204**. First, the processor **104** considers the difference in loft angle between the candidate loft angle **204** and the reference loft angle **206** yielding the loft angle difference. To determine the predicted spin rate **279**, the processor **104** then multiplies the loft angle difference by the predicted spin rate slope **278** to yield the predicted spin rate **279** for the candidate club **202** having the candidate loft angle **204**.

### Optimizing Predicted Club Loft Angle Combinations for Consistently Gapped Set

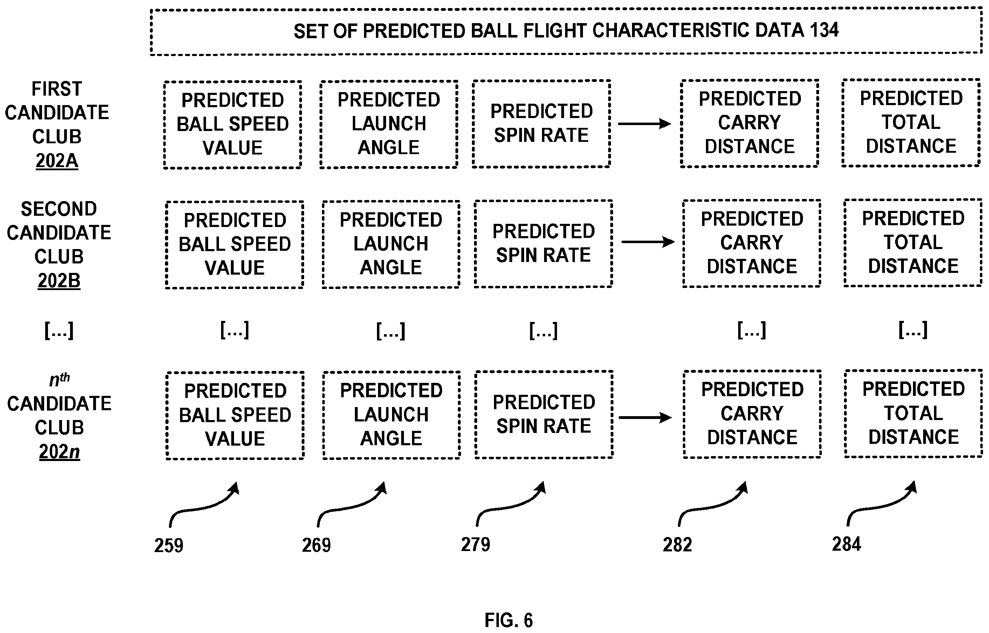

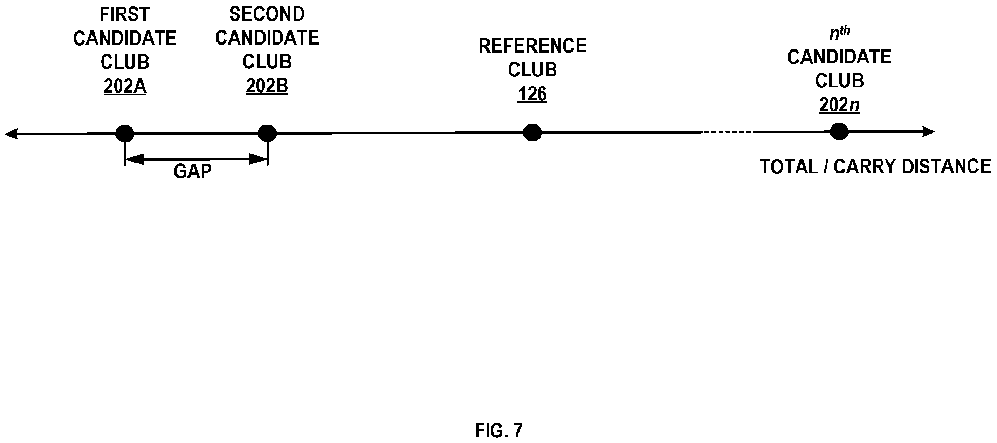

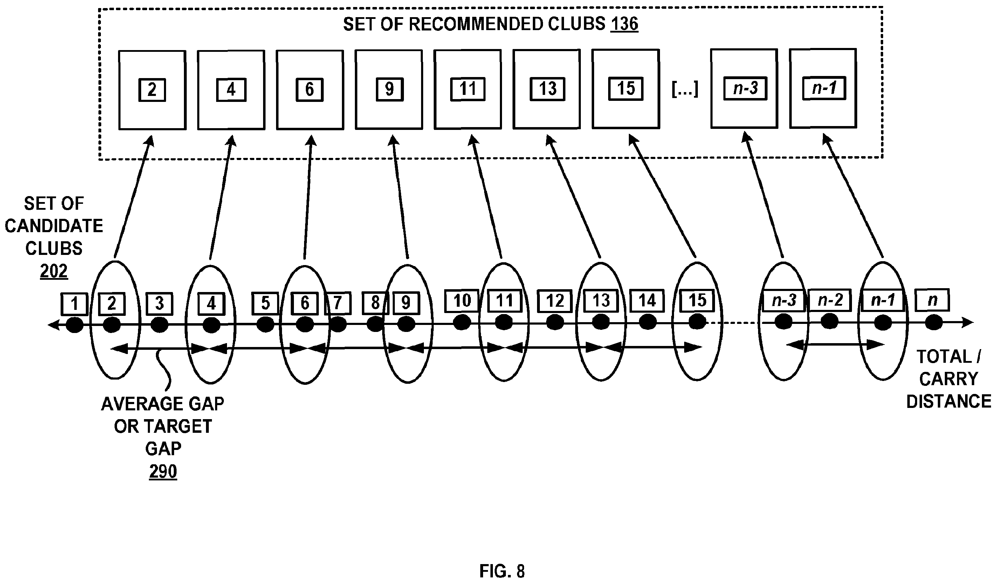

With reference to FIGS. **6-8**, the processor **104** leverages the predicted ball flight characteristics **134** as adjusted to identify the set of recommended clubs **136** selected from the plurality of candidate clubs **202** (shown in the figures as candidate clubs **202A-202*n*)** with optimized gapping. The processor **104** determines an optimal combination of recommended clubs **136** from the plurality of candidate clubs **202** by evaluating the set of predicted ball flight characteristics **134** as adjusted of each candidate loft angle **204** available for each candidate club **202**. Specifically, the processor **104** determines a predicted carry distance **282** and/or predicted total distance **284** for each candidate loft angle **204** and selects predicted loft angles that correspond with the set of recommended clubs **136** in such a way that the gaps (FIGS. **7** and **8**) between carry distances of each recommended club **136** are consistent. As such, the processor **104** selects the set of recommended clubs **136** from the plurality of candidate clubs that collectively result in optimal gapping between each predicted club.

In one aspect, the processor **104** can determine a predicted carry distance and/or a predicted total distance of the set of predicted ball flight characteristics **134** for a candidate club **202** having the candidate loft angle **204** using the predicted ball speed, the predicted launch angle and/or the predicted spin rate for the candidate loft angle **204**. For example, the processor **104** can determine the predicted carry distance using a projectile motion function that takes the predicted ball speed, the predicted launch angle and the predicted spin rate as input and models the flight trajectory of a ball hypothetically hit using the candidate club **202**, including at least one of: a predicted apex height, a predicted carry distance, and a predicted total distance.

Aspects of the projectile motion function, including constants and operators, are pre-determined based on observable correlations and physics principles well understood by one of ordinary skill in the art. In general, the predicted and/or carry distance can be dependent on ball speed, launch angle, the force of gravity, air resistance, and lift force. The air resistance can depend on the velocity of the ball, the surface area of the ball, and an empirically derived drag coefficient, wherein the drag coefficient can be dependent on spin rate and ball speed. Similarly, the lift force can be dependent on an empirically derived coefficient of lift, wherein the coefficient of lift is dependent on spin rate and ball speed.

Optionally, the projectile motion function can incorporate at least one of an expected mass of the ball, an expected air temperature, and/or an expected air density to determine the predicted carry distance using the predicted ball speed, the predicted launch angle, and the predicted spin rate. In a further aspect, the processor **104** can determine a predicted total distance of the set of predicted ball flight characteristics **134** for a candidate club **202** using the predicted carry distance and can optionally incorporate an expected coefficient of friction of a ground surface (e.g., fairway, rough, green, etc.).

The processor **104** can generate a prediction for the ball flight characteristics of every possible loft angle that can be used for a club head within the set. A typical golf club set includes a limited number of clubs (generally 14) spread out over a wide range of loft angles. Excluding drivers and putters, a typical golf club set comprises 12 clubs having loft angles spread approximately evenly over a range of loft angles from approximately 14 degrees to approximately 60 degrees. To provide a recommendation for a useful golf club set, the processor **104** must identify the combination of recommended clubs **136** from the plurality of candidate clubs **202** that not only provide consistent gaps between the carry distance **282** of each recommended club **136**, but also provides a wide range of loft angles to fill out the entire set of recommended clubs **136**. In some embodiments, each candidate loft angle **204** can be classified as corresponding to a certain club "number" (*i.e.* 5-iron, 6-iron, 7-iron, etc.). For example, the adjusted ball flight prediction **158** generated for candidate loft angles **204** between 34 and 37.5 degrees can be classified as corresponding to an 8-iron, whereas the adjusted ball flight prediction **158** generated for candidate loft angles **204** between 38 and 41.5 degrees can be classified as corresponding to a 9-iron. The processor **104** can be configured to identify one recommended club **136** having a loft angle from each range of candidate loft angles **204** associated with each club number. Within the parameter that one recommended club **136** of each club number must be selected, the processor **104** can identify the optimal combination of loft angles from the plurality of candidate loft angles **204** that produce a desired gap between predicted ball flight distances (e.g., predicted carry distance **282** and/or predicted total distance **284**) that are associated with each respective recommended club **136**. This allows the processor **104** to identify a combination of loft angles that make up a full set of recommended clubs **136**, while still providing consistent gapping within the set of recommended clubs **136**. Following identification of the set of recommended clubs **136** that result in optimal gapping, the system **100** can display, at the display device **138** in communication with the processor **104**, information related to the set of recommended clubs **136** (e.g., the display device **138** can display information that includes a recommendation of the set of recommended clubs **136**).

In many embodiments, the range of loft angles associated with each club type can be sequential between different club types. For example, if an 8-iron is associated with loft angles between 34 and 37.5 degrees, a 7-iron might be associated with loft angles between 28 and 33.5 degrees, and a 6-iron might be associated with loft angles between 24 and 27.5 degrees. In alternative embodiments, the range of loft angles associated with each club type can overlap the range of loft angles associated with each adjacent club type. Such overlapping loft angle ranges allow for a greater number of possible loft angle combinations to be evaluated by the processor **104** to identify the set of recommended clubs **136** with optimized gapping. For example, in some embodiments, the processor **104** can classify a predicted loft angle of 34 degrees as an 8-iron in some potential combinations and classify a predicted loft angle of 34 degrees as a 7-iron in other potential combinations. This allows the processor **104** to evaluate a greater number of possible combinations of recommended clubs **136** to identify a set of recommended clubs **136** with optimized gapping.

In some embodiments, if the reference club **126** struck by the player during a fitting session is a 7-iron associated with the reference loft angle **206**, the system can still evaluate alternative possibilities of loft angles for the 7-iron of the set of recommended clubs **136**. In this way, the recommendation is not limited to selecting the particular loft angle of the reference club **126** for use as the 7-iron within the set of recommended clubs **136**.

As shown in FIG. **8**, the processor **104** identifies the set of recommended clubs **136** by selecting one loft angle corresponding to each club number to identify a combination of recommended clubs **136** from the plurality of candidate clubs **202** that best complete the set. Every recommended club **136** is associated with a predicted distance, and any given set of recommended clubs **136** comprises a certain gapping based on the predicted carry distance **282** or predicted total distance **284** of each recommended club **136** within the set of recommended clubs **136**. Referring to block **904** of FIG. **9**, the processor **104** can evaluate all possible combinations of the set of recommended clubs **136** from the plurality of candidate clubs **202** to determine which combination comprises the most desirable gapping within the set of recommended clubs **136** (e.g., by evaluating predicted carry distances **282** or predicted total distances **284** associated with each respective candidate club **202** and identifying the set of recommended clubs **136** from the plurality of candidate clubs **202** that collectively result in the most desirable gapping between predicted carry distances **282** or predicted total distances **284**). In many embodiments, the processor **104** identifies a consistently gapped set by determining which combination of recommended clubs **136** results in the smallest variation in gaps between each recommended club **136** (e.g., the gap between the 3-iron and the 4-iron is the substantially the same as the gap between the 4-iron and the 5-iron, etc.).

In some embodiments, a player may desire a set of golf clubs that collectively have a specific average gap between club distances (hereafter referred to as a "target gap" **290**) rather than the most consistent gap possible. Rather than recommending the smallest variation between predicted club gaps, the processor **104** can identify the set of recommended clubs **136** from the plurality of candidate clubs **202** where the average predicted gap between clubs is as close to the target gap **290** as possible, and can display the information indicative of the set of recommended clubs **136**. As such, in some embodiments, the processor **104** can receive input data indicative of the target gap **290**. For example, there may be some situations wherein to achieve the most consistent gapping for a particular player, the average gap might be approximately 12 yards. However, if the player desires a target gap **290** of approximately 10 yards, the processor **104** can be configured to identify set of recommended clubs **136** where the average predicted gap between each recommended club **136** is as close to 10 yards as possible, even if the predicted gaps in such a recommendation are slightly less consistent.

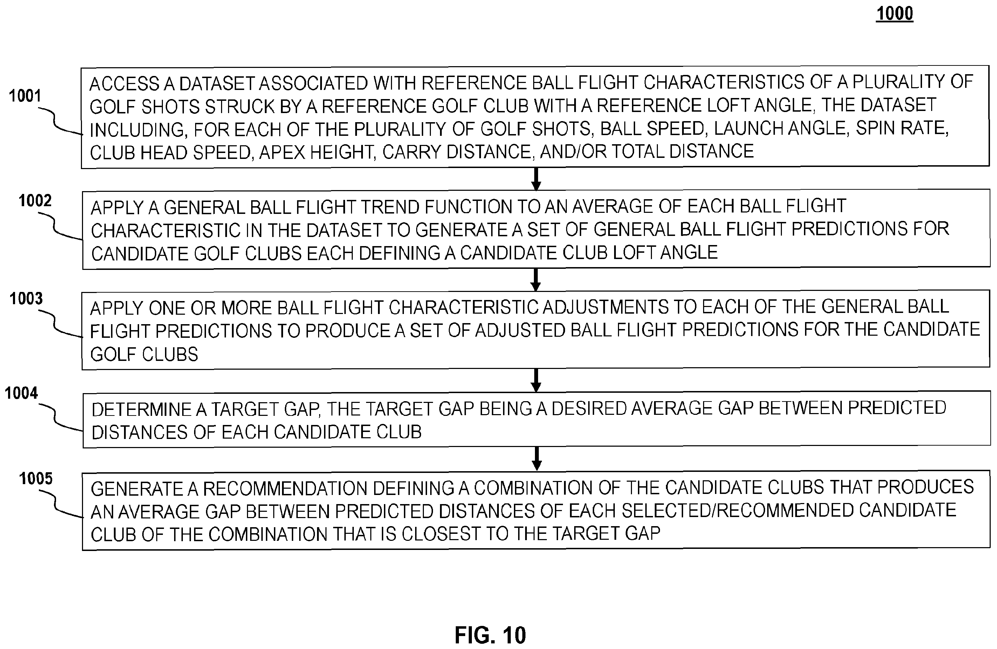

FIG. 10 illustrates a process flow diagram outlining an alternative implementation of a process **1000** executable by the processor **104** wherein the set of recommended clubs **136** is optimized to a specific target gap **290**. Blocks **1001**, **1002**, and **1003** are similar to blocks **901**, **902**, and **903** of process flow diagram **900**, because the adjusted ball flight predictions **158** for each candidate club **202** are created the same way in both implementations. Referring to block **1004**, the processor **104** can receive input data indicative of a predetermined target gap **290**, where the target gap **290** can include an average gap between predicted distances of each recommended club **136** desired by the golfer. Referring to block **1005**, the processor **104** identifies the set of recommended clubs **136** from the plurality of candidate clubs **202** that collectively result in an average gap between predicted distances that most closely matches the target gap **290**. The processor **104** determines the optimal combination of recommended clubs **136** by evaluating the predicted distances of all possible combinations of candidate loft angles **204** for each candidate club **202**, as described above in relation to FIG. 9.

In some embodiments, it may be desirable to have multiple target gaps within the set of recommended clubs **136**. For example, in some embodiments a player might desire a smaller target gap **290** between low lofted clubs (i.e., 7-iron and clubs with lower lofts than a 7-iron) and a larger target gap **290** between high lofted clubs (i.e., clubs with higher lofts than a 7-iron) or vice versa. The processor **104** can be further configured to identify the set of recommended clubs **136** from the plurality of candidate clubs **202** that result in optimal gapping for a plurality of target gaps **290**.

### Hybrid and Fairway Wood Tradeoffs

The processor **104** can be further operable to identify an optimal combination of fairway woods, hybrids, and irons for inclusion in the set of recommended clubs **136** from the plurality of candidate clubs **202**. Depending on a given player's ball flight characteristics for lower lofted clubs, different players will achieve greater performance with different types of clubs (*i.e.* fairway wood, hybrid, or iron) for a given loft angle. Certain players have ball flight characteristics that are not conducive to playing low lofted iron-type clubs. For example, certain players, especially those with relatively low spin rates, struggle with low lofted irons such as a 3-iron or a 4-iron. Such players often experience increased performance using hybrids or fairway woods at such low loft angles rather than irons, such as using a 3-hybrid rather than a 3-iron. For a certain player whose ball flight characteristics are not conducive to playing low lofted irons, such low lofted irons can be considered "unplayable" for that player. Using the set of predicted ball flight characteristics **134** as adjusted for low lofted irons, the processor **104** can determine which irons will be unplayable for a given player and can identify suitable hybrids and/or fairway woods to replace such unplayable irons in the set.

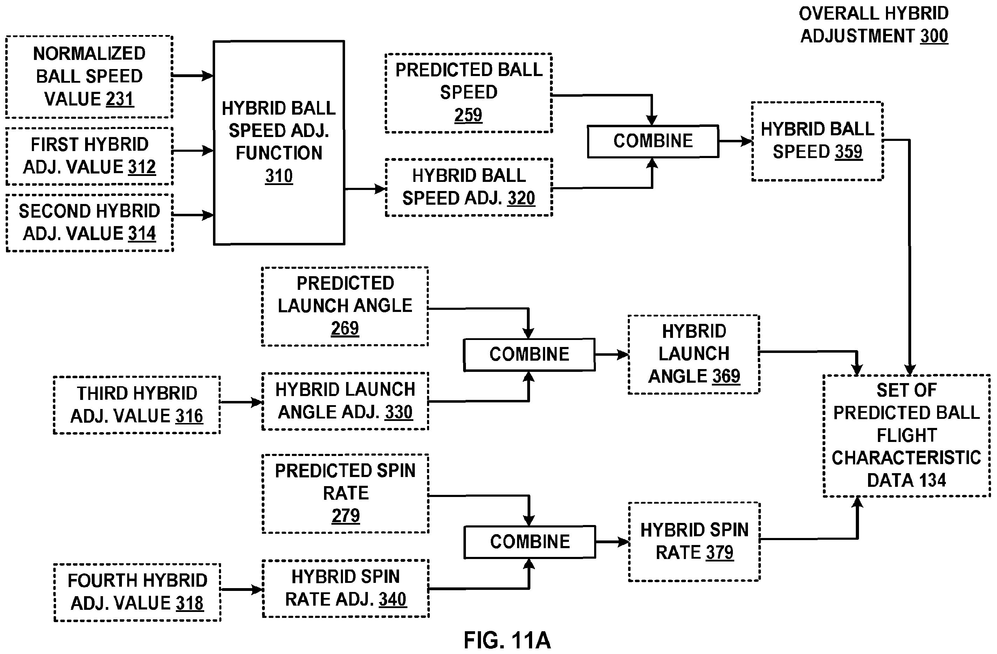

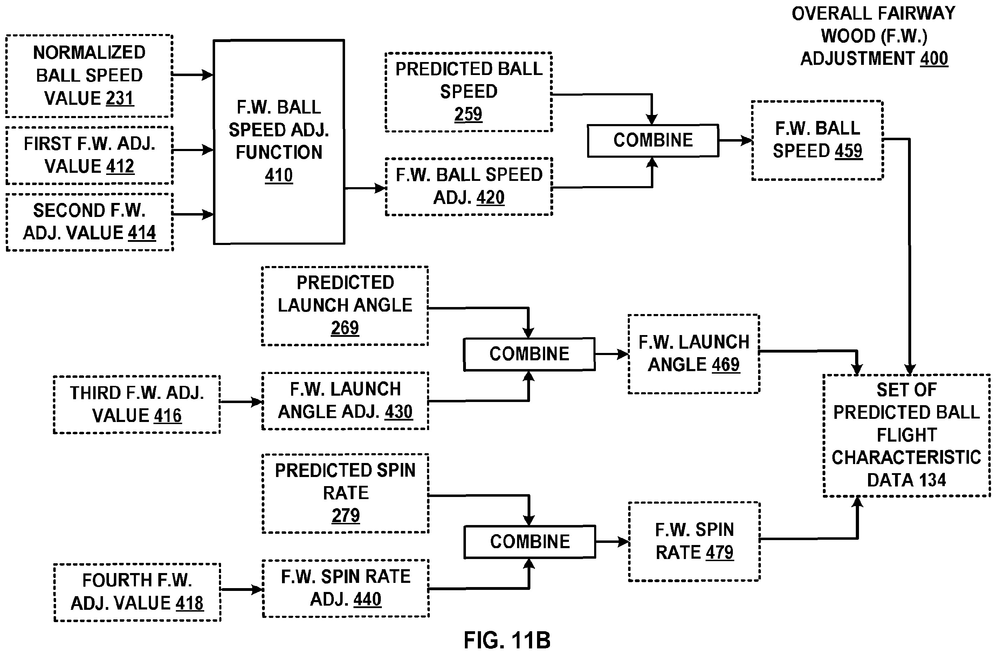

In one aspect, the processor **104** can adjust the set of predicted ball flight characteristics **134** for a candidate loft angle based on the material of the candidate club (e.g., iron, hybrid, fairway wood, etc.). For instance, if the candidate club is a hybrid club, the processor **104** can adjust the set of predicted ball flight characteristics **134** accordingly. In particular, for a candidate loft angle **204**, the processor **104** can determine an initial general ball flight prediction for the candidate loft angle **204** as discussed above resulting in the predicted ball speed **259**, the predicted launch angle **269**, and the predicted spin rate **279** for an iron candidate club **202** at the candidate loft angle **204**. Then, to adjust the set of predicted ball flight characteristics **134** to reflect a hybrid candidate club **202** at the same candidate loft angle **204**, the processor **104** can apply a hybrid ball speed adjustment to the predicted ball speed **259**, a hybrid launch angle adjustment to the predicted launch angle **269**, and a hybrid spin rate adjustment to the predicted spin rate **279** resulting in a hybrid ball speed, a hybrid launch angle, and a hybrid spin rate. This is reflected in FIG. **11A**, which shows an overall hybrid adjustment **300** which will be described in greater detail below. Similarly, to adjust the set of predicted ball flight characteristics **134** to reflect a fairway wood candidate club **202** at the same candidate loft angle **204**, the processor **104** can apply a fairway wood ball speed adjustment to the predicted ball speed **259**, a fairway wood launch angle adjustment to the predicted launch angle **269**, and a fairway wood spin rate adjustment to the predicted spin rate **279** resulting in a fairway wood ball speed, a fairway wood launch angle, and a fairway wood spin rate. This is reflected in FIG. **11B**, which shows an overall fairway wood adjustment **400** which will also be described in greater detail below.

Referring directly to FIG. **11A**, the overall hybrid adjustment **300** results in a hybrid ball speed **359**, a hybrid launch angle **369** and a hybrid spin rate **379**. As shown, the overall hybrid adjustment **300** includes a hybrid ball speed adjustment function **310** that accepts the normalized ball speed value **231** from the ball hit by the individual using the reference club **126** and results in a hybrid ball speed adjustment **320**. In some embodiments, the hybrid ball speed adjustment function **310** involves dividing the normalized ball speed value **231** by a first hybrid adjustment value **312**. If the resultant value is less than one, then the resultant value can be multiplied by a second hybrid adjustment value **314** to yield the hybrid ball speed adjustment **320**. Conversely, if the resultant value is greater than one, then the hybrid ball speed adjustment **320** is equal to the second hybrid adjustment value **314**. The hybrid launch angle adjustment **330** can simply include a third hybrid adjustment value **316**, and the hybrid spin rate adjustment **340** can simply include a fourth hybrid adjustment value **318**. To obtain the hybrid ball speed **359**, the hybrid ball speed adjustment **320** can be added to or otherwise combined with the predicted ball speed **259** for the candidate loft angle **204** discussed in the previous section. Similarly, to obtain the hybrid launch angle **369**, the hybrid launch angle adjustment **330** can be added to or otherwise combined with the predicted launch angle **269** for the candidate loft angle **204** discussed in the previous section; to obtain the hybrid spin rate **379**, the hybrid spin rate adjustment **340** can be added to or otherwise combined with the predicted spin rate **279** for the candidate loft angle **204** discussed in the previous section. For a hybrid candidate club **202** having the candidate loft angle **204**, the processor **104** can update the set of predicted ball flight characteristics **134** to reflect the hybrid ball speed **359**, the hybrid launch angle **369**, and the hybrid spin rate **379**. The first, second, third and fourth hybrid adjustment values **312, 314, 316** and **318** can be empirically obtained and derived through observation of many test shots hit using iron and hybrid clubs of varying loft angles.

Referring directly to FIG. **11B**, the overall fairway wood adjustment **400** results in a fairway wood ball speed **459**, a fairway wood launch angle **469** and a fairway wood spin rate **479**. As shown, the overall fairway wood adjustment **400** includes a fairway wood ball speed adjustment function **410** that accepts the normalized ball speed value **231** from the ball hit by the individual using the reference club **126** and results in a fairway wood ball speed adjustment **420**. In some embodiments, the fairway wood ball speed adjustment function **410** involves dividing the normalized ball speed value **231** by a first fairway wood adjustment value **412**. If the resultant value is less than one, then the resultant value can be multiplied by a second fairway wood adjustment value **414** to yield the fairway wood ball speed adjustment **420**. Conversely, if the resultant value is greater than one, then the fairway wood ball speed adjustment **420** is equal to the second fairway wood adjustment value **414**. The fairway wood launch angle adjustment **430** can simply include a third fairway wood adjustment value **416**, and the fairway wood spin rate adjustment **440** can simply include a fourth fairway wood adjustment value **418**. To obtain the fairway wood ball speed **459**, the fairway wood ball speed adjustment **420** can be added to or otherwise combined with the predicted ball speed **259** for the candidate loft angle **204** discussed in the previous section. Similarly, to obtain the fairway wood launch angle **469**, the fairway wood launch angle adjustment **430** can be added to or otherwise combined with the predicted launch angle **269** for the candidate loft angle **204** discussed in the previous section; to obtain the fairway wood spin rate **479**, the fairway wood spin rate adjustment **440** can be added to or otherwise combined with the predicted spin rate **279** for the candidate loft angle **204** discussed in the previous section. For a fairway wood candidate club **202** having the candidate loft angle **204**, the processor **104** can update the set of predicted ball flight characteristics **134** to reflect the fairway wood ball speed **459**, the fairway wood launch angle **469**, and the fairway wood spin rate **479**. The first, second, third and fourth fairway wood adjustment values **412, 414, 416** and **418** can be empirically obtained and derived through observation of many test shots hit using iron and fairway wood clubs of varying loft angles.

FIG. 12 illustrates a process flow diagram of an additional process **1100** outlining the ability of the processor **104** ability to identify an optimal combination of club types (irons, hybrids, or fairway woods) for inclusion in the set of recommended clubs **136** from the plurality of candidate clubs **202**. Blocks **1201-1204** are similar to previous steps of FIGS. **9-10** previously described. Referring to block **1205** of FIG. **12** however, the processor **104** determines which club types (irons or hybrids) are unplayable for a given player by comparing the predicted ball flight characteristics **134** of low lofted irons or hybrids with the predicted ball flight characteristics **134** of an adjacent higher lofted candidate club **202**. The playability or unplayability of a particular candidate club **202** is determined by a predicted apex height of the candidate club **202** relative to the predicted apex height of the reference club **126** as well as the gap between the candidate club **202** in question and an adjacent, higher lofted candidate club **202**.

Relating the apex height, the processor **104** can define an apex height ratio being the apex height of a candidate club **202** divided by the apex height of the the reference club **126**. The apex height ratio can express the apex height of the candidate club **202** in question as a percentage of the reference club **126** apex height. The processor **104** can further define an apex height playability threshold that can be used to determine the playability of any given club in the set of recommended clubs **136**. Any candidate club **202** that includes an apex height ratio lower than the apex height playability threshold can be considered "unplayable."

The apex height playability threshold can range between 70% and 90%. In some embodiments, the apex height playability threshold can be between approximately 70% and 75%, between 75% and 80%, between 80% and 85%, or between 85% and 90%. In some embodiments, the apex height playability threshold can be between 70% and 80%, between 75% and 85%, or between 80% and 90%. In some embodiments, the apex height playability threshold can be approximately 75%, 76%, 77%, 78%, 79%, 80%, 81%, 82%, 83%, 84%, 85%, 86%, 87%, 88%, 89%, or 90%. In some embodiments, the processor **104** can define separate apex height playability thresholds for iron-type clubs and hybrid-type clubs within the ranges listed above. In some embodiments, the processor **104** can define an iron-type apex height playability threshold and a hybrid-type apex height playability threshold. A candidate club **202** is considered unplayable if the candidate club **202** has an apex height ratio that is below the associated apex height playability threshold.

Relating to the gap between candidate clubs **202** determining playability, the processor **104** can define a gap playability threshold. The gap playability threshold is used to determine if the gap between a particular candidate club **202** of a certain club type and an adjacent higher lofted recommended club **136** within the set of recommended clubs **136** is too small for the candidate club **202** to be playable. The gap playability threshold is defined as a maximum difference of the gap between the candidate club **202** in question and an adjacent higher lofted recommended club **136** within the set of recommended clubs **136** and the average gap between all the recommended club **136** within the set of recommended clubs **136**. For example, if the gap between the candidate club **202** in question and an adjacent higher lofted recommended club **136** within the set of recommended clubs **136** is too small relative to the average gap between the recommended clubs **136** within the set of recommended clubs **136**, the candidate club **202** in question can be determined unplayable. In some embodiments, the gap playability threshold can be determined by the relationship between the gaps of adjacent recommended clubs **136** and the target gap **290**, rather than with respect to the average gap.

In many embodiments, the gap playability threshold can range between 2 yards and 5 yards. In some embodiments, the gap playability threshold is between approximately 2 yards and 2.2 yards, between 2.2 yards and 2.4 yards, between 2.4 yards and 2.6 yards, between 2.6 yards and 2.8 yards, between 2.8 yards and 3 yards, between 3 yards and 3.2 yards, between 3.2 yards and 3.4 yards, between 3.4 yards and 3.6 yards, between 3.6 yards and 3.8 yards, between 3.8 yards and 4 yards, between 4 yards and 4.2 yards, between 4.2 yards and 4.4 yards, between 4.4 yards and 4.6 yards, between 4.6 yards and 4.8 yards, or between 4.8 yards and 5 yards. In some embodiments, the gap playability threshold is between 2 yards and 3 yards, between 2.25 yards and 3.25 yards, between 2.5 yards and 3.5 yards, between 2.75 yards and 3.75 yards, between 3 yards and 4 yards, between 3.25 yards and 4.25 yards, between 3.5 yards and 4.5 yards, between 3.75 yards and 4.75 yards, or between 4 yards and 5 yards. In some embodiments, the gap playability threshold can be approximately 2 yards, 2.25 yards, 2.5 yards, 2.75 yards, 3 yards, 3.5 yards, 3.75 yards, or 4 yards. In some embodiments, the processor **104** can define separate gap playability thresholds for iron-type clubs and hybrid-type clubs within the ranges listed above. As such, in some embodiments, the processor **104** can define an iron-type gap playability threshold and a hybrid-type gap playability threshold. If the difference in the gap between a given candidate club **202** of a specific type and the adjacent higher lofted recommended club **136** within the set of recommended clubs **136** and the average gap between all the recommended clubs **136** within the set of recommended clubs **136** is greater than the gap playability threshold, the candidate club **202** is considered unplayable.

Referring to block **1206**, the processor **104** can evaluate such conditions in which an iron candidate club **202** is considered unplayable and can identify a hybrid-type candidate club **202** from the plurality of candidate clubs **202** to replace the unplayable iron candidate club **202** for inclusion in the set of recommended clubs **136**. The hybrid-type candidate club **202** that is selected for inclusion in the set of recommended clubs **136** can have a loft angle that results in a desirable gap between the hybrid-type candidate club **202** and an adjacent iron recommended club **136** of the set of recommended clubs **136**. Similarly, the processor **104** can evaluate such conditions in which a hybrid-type candidate club **202** is considered unplayable and can identify a fairway wood-type candidate club **202** to replace the unplayable hybrid-type candidate club **202** for inclusion in the set of recommended clubs **136**. The fairway wood-type candidate club **202** that is selected for inclusion in the set of recommended clubs **136** can have a loft angle that results in a desirable gap between the fairway wood-type candidate club **202** and an adjacent hybrid-type recommended club **136** of the set of recommended clubs **136**.

The processor **104** is non-limiting and additional components would be appreciated by those of ordinary skill in the art. In some embodiments, for example, the processor **104** is in operable communication with a portable device, which may correspond to an individual golfer or fitter. The portable device may include a smartphone, laptop, tablet, or other portable device that may be used to execute a user interface and to access data associated with the set of reference ball flight characteristics **130** or predicted ball flight characteristics **134** described herein, receive information indicative of one or more recommended clubs **136** of the set of recommended clubs **136**, and other feedback information after an individual is evaluated with the processor **104**. In addition, although not depicted, the processor **104** may leverage data from external devices, such as professional golfer shot information, club information, and other forms of information which may be used to tailor general ball flight characteristic trends, or modify functionality described herein.

The processor **104** is non-limiting and additional components would be appreciated by those of ordinary skill in the art. In some embodiments, for example, the processor **104** is in operable communication with a portable device, which may correspond to an individual golfer or fitter. The portable device may include a smartphone, laptop, tablet, or other portable device that may be used to execute a user interface and to access data associated with the set of reference ball flight characteristics **130** or predicted ball flight characteristics **134** described herein, receive information indicative of one or more recommended clubs **136** of the set of recommended clubs **136**, and other feedback information after an individual is evaluated with the processor **104**. In addition, although not depicted, the processor **104** may leverage data from external devices, such as professional golfer shot information, club information, and other forms of information which may be used to tailor general ball flight characteristic trends, or modify functionality described herein.

### EXAMPLES

### Example 1

The standard error of gaps between club carry distance in an exemplary predicted club set was compared to the standard error of gaps between club carry distance in a control golf set for a particular player. For the control golf club set, the player hit a plurality of shots for each club in a golf club set comprising irons with standard loft angles (i.e., 25-58 degrees). The exemplary predicted club set was established from the player's 7-iron ball flight characteristics alone using the method described above. Table 1 shows the carry distance for the clubs in the exemplary predicted set as well as the clubs in the control set. Table 1 also shows the gap distances for both the exemplary predicted set and the control set.

As shown in Table 1, the greatest error between the control club set and the exemplary predicted club set was only 3.0% when comparing the carry distance of each club. The greatest error between the control club set and the exemplary predicted club set was only 1.8% when comparing carry gap distances between each club. The relatively low discrepancy between the predicted club set and the measured control club set indicates an effective predictive model. Specifically, the low error indicates the software can accurately predict the carry distance and gap distance of clubs in a standard golf club set when provided with only the 7-iron swing characteristics of a given player.

**Table 1 - Control Set vs. Exemplary Predicted Set**

| Club | Control Carry Distance | Predicted Carry Distance | %Error | Control Gap | Predicted Gap | % Error |
|---|---|---|---|---|---|---|
| 3i | 238.0 | 241 | 3.0 | - | - | - |
| 4i | 227.0 | 228.9 | 1.9 | 11.0 | 12.1 | 1.1 |
| 5i | 215.3 | 215.4 | 0.1 | 11.7 | 13.5 | 1.8 |
| 6i | 202.6 | 202.4 | -0.2 | 12.8 | 13 | 0.2 |
| 7i | 189.4 | 188.7 | -0.7 | 13.1 | 13.7 | 0.6 |
| 8i | 175.2 | 173.5 | -1.7 | 14.2 | 15.2 | 1.0 |
| 9i | 160.1 | 158.5 | -1.6 | 15.1 | 15 | -0.1 |
| PW | 145.1 | 144.6 | -0.5 | 15.0 | 13.9 | -1.1 |

### Example 2

In one example, a player exhibited 7-iron swing characteristics including a ball speed average of 120 mph, a 16 deg launch angle, and spin rate of 6,500 rpm. The variation in predicted gap distances using the present predictive model was compared between a standard set and a custom gapped set. In the standard set, the candidate loft angles were selected based on the standard commercially available loft angles for each club. In other words, the standard set reflects the gap distances the player would have without using the system to recommend an optimized set. The custom gapped set included a recommended combination of candidate clubs that produced optimal gapping.

The carry distance for each club in the player standard set and custom gapped set as well as the gap distances between each club in the player standard set and custom gapped set are displayed below in Tables 2A and 2B. The predicted average carry distance for each club in the custom gapped set and player standard set as well as the gap distances between each club for the 7 iron to long iron clubs are displayed below in Table 2A. The target gap distance for the 7 iron to long iron range for the custom gapped set was 12.5 yards.

**Table 2A - 7i to long iron**

| Club Type | Standard Club Loft (degrees) | Standard Carry Distance (yds) | | Custom Club Loft (degrees) | | Custom Carry Distance (yds) | | Target Gap (yds) | Standard Gap (yds) | | Custom Gap (yds) |
|---|---|---|---|---|---|---|---|---|---|---|---|
| 3i | 19.0 | 220.0 | - | - | | - | | - | | - | |
| 4i | 22.0 | 210.3 | | - | - | | 12.5 | | 9.7 | | - |
| 5i | 25.0 | 197.7 | | 26 | 197.4 | | 12.5 | | 12.6 | | - |
| 6i | 31.5 | 184.9 | | 29.5 | 184.6 | | 12.5 | | 12.8 | | 12.8 |
| 7i | 35.0 | 172.4 | | 33.0 | 172.1 | | 12.5 | | 12.5 | | 12.5 |
| | | | | | | | Average | | 11.9 | | 12.6 |
| | | | | | | | Std Dev | | 1.47 | | 0.21 |

The standard deviation of gap distances for the 7 iron to long iron clubs in the custom gapped golf club set was 0.21, which is 1.26 yards lower than the standard deviation of gap distances in the player standard golf club set over the same range of clubs (a decrease in variance of 85.7%).

The predicted average carry distance for each club in the player standard set and custom gapped set as well as the gap distances between each club for the wedges to 7 iron clubs are displayed below in Table 2B. The target gap distance for wedge to 7 iron range for the custom gapped set was 12 yards.

**Table 2B - wedges to 7i**

| Club Type | Standard Club Loft (degrees) | Standard Carry Distance (yds) | Custom Club Loft (degrees) | Custom Carry Distance (yds) | Target Gap (yds) | Standard Gap (yds) | Custom Gap (yds) |
|---|---|---|---|---|---|---|---|
| 8i | 37.0 | 159.1 | 36.5 | 160.4 | 12 | 13.3 | 11.7 |
| 9i | 41.0 | 146.4 | 40.5 | 147.7 | 12 | 12.7 | 12.7 |
| PW | 45.0 | 134.4 | 44.5 | 135.6 | 12 | 12 | 12.1 |
| UW | 50.0 | 119.6 | 48.5 | 123.7 | 12 | 14.8 | 11.9 |
| SW | - | - | 52.5 | 113.1 | 12 | - | 11.4 |
| | | | | | Average | 13.2 | 12.0 |
| | | | | | Std Dev | 1.19 | 0.49 |

The standard deviation of gap distances for the wedges to 7 iron clubs in the custom gapped golf club set was 0.49, which is 0.70 yards lower than the standard deviation of gap distances in the player standard golf club set (a decrease in variance of 58.8%).

As established in Example 1, the predictive model described herein provides a highly accurate prediction of a golf club set based on a given player's reference club characteristics. As illustrated in the above tables, the system is able to produce a recommended set of clubs that achieves significantly more consistent gapping.

### Example 3

In another example, a player exhibited 7-iron swing characteristics including a relatively slow ball speed average of 113.2 mph, an 18 deg launch angle, and spin rate of 6,300 rpm. The variation in predicted gap distances using the present predictive model was compared between a standard set and a custom gapped set. In the standard set, the candidate loft angles were selected based on the standard commercially available loft angles for each club. In other words, the standard set reflects the gap distances the player would have without using the system to recommend an optimized set. The custom gapped set included a recommended combination of candidate clubs that produced optimal gapping.

The carry distance for each club in the player standard set and custom gapped set as well as the gap distances between each club in the player standard set and custom gapped set are displayed below in Tables 3A and 3B. The predicted average carry distance for each club in the custom gapped set and player standard set as well as the gap distances between each club for the 7 iron to long iron clubs are displayed below in Table 3A.

**Table 3A - 7i to long iron**

| Club Type | Standard Set Lofts (degrees) | Slow Ball Speed Standard Carry Distance (yds) | Custom Set Lofts (degrees) | Custom Carry Distance (yds) | Target Gap (yds) | Slow Ball Speed Standard Gap (yds) | Custom Gap (yds) |
|---|---|---|---|---|---|---|---|
| 4i | 20.5 | 185 | - | - | - | - | - |
| 5i | 23.5 | 176.6 | 22 | 181.2 | 13.1 | 8.4 | - |
| 6i | 26.5 | 167.7 | 26 | 169.5 | 13.1 | 8.9 | 11.7 |
| 7i | 28.5 | 156.3 | 30 | 156.5 | 13.1 | 11.4 | 13.0 |
| | | | | | Average | 9.6 | 12.4 |
| | | | | | Std Dev | 1.31 | 0.65 |

The standard deviation of gap distances for the 7 iron to long iron clubs in the custom gapped golf club set was 0.65, which is 0.66 yards lower than the standard deviation of gap distances in the player standard golf club set (a decrease in variance of 50.4%).

The predicted average carry distance for each club in the player standard set and custom gapped set as well as the gap distances between each club for the wedges to 7 iron clubs are displayed below in Table 3B.

**Table 3B - Wedges to 7i**

| Club Type | Standard Set Lofts (degrees) | Slow Ball Speed Standard Carry Distance (yds) | | Custom Set Lofts (degrees) | | Custom Carry Distance (yds) | | Target Gap (yds) | | Slow Ball Speed Standard Gap (yds) | | Custom Gap (yds) |
|---|---|---|---|---|---|---|---|---|---|---|---|---|
| 8i | 34.5 | 143.0 | | 33.5 | | 146.0 | | 11 | | 13.3 | | 10.5 |
| 9i | 39.5 | 129.7 | | 37.5 | | 135.0 | | 11 | | 13.3 | | 11.0 |
| PW | 44.5 | 116.3 | | 41 | | 124.6 | | 11 | | 13.4 | | 10.4 |
| UW | 49.5 | 102.0 | | 45.5 | | 113.8 | | 11 | | 14.3 | | 10.8 |
| SW | 54.0 | 89.3 | | 49.5 | | 102.5 | | 11 | | 12.7 | | 11.3 |
| LW | 58.0 | 77.7 | | 53.5 | | 91.2 | | 11 | | 11.6 | | 11.3 |
| LW2 | - | - | 58.0 | 78.2 | | | 11 | | - | | 13.0 | |
| | | | | | | | Average | | 13.1 | | 11.2 | |
| | | | | | | | Std Dev | | 0.90 | | 0.87 | |

The standard deviation of gap distances for the wedges to 7 iron clubs in the custom gapped golf club set was 0.87, which is 0.03 yards lower than the standard deviation of gap distances in the player standard golf club set (a decrease in variance of 3.3%).

As established in Example 1, the predictive model described herein provides a highly accurate prediction of a golf club set based on a given player's reference club characteristics. As illustrated in the above tables, the system is able to produce a recommended set of clubs that achieves significantly more consistent gapping.

### Example 4

In another example, a player exhibited 7-iron swing characteristics including a relatively fast ball speed average of 132.1 mph, a 15.5 deg launch angle, and spin rate of 6,800 rpm. The variation in predicted gap distances using the present predictive model was compared between a standard set and a custom gapped set. In the standard set, the candidate loft angles were selected based on the standard commercially available loft angles for each club. In other words, the standard set reflects the gap distances the player would have without using the system to recommend an optimized set. The custom gapped set included a recommended combination of candidate clubs that produced optimal gapping.

The carry distance for each club in the player standard set and custom gapped set as well as the gap distances between each club in the standard set and custom gapped set are displayed below in Tables 4A and 4B. The predicted average carry distance for each club in the player standard set and custom gapped set as well as the gap distances between each club for the 7 iron to long iron clubs are displayed below in Table 4A.

**Table 4A- 7i to Long Iron**

| Club Type | Standard Set Lofts (degrees) | Fast Ball Speed Standard Carry Distance (yds) | Custom Set Lofts (degrees) | Custom Carry Distance (yds) | Target Gap (yds) | Fast Ball Speed Standard Gap (yds) | Custom Gap (yds) |
|---|---|---|---|---|---|---|---|
| 3i | 20.0 | 250.0 | - | - | - | - | - |
| 4i | 23.5 | 236.5 | 24.5 | 232.5 | 14.1 | 13.5 | - |
| 5i | 27.0 | 220.7 | 27.5 | 218.8 | 14.1 | 15.8 | 13.7 |
| 6i | 30.5 | 205.1 | 30.5 | 205.6 | 14.1 | 15.6 | 13.2 |
| 7i | 34.0 | 190.6 | 34 | 191.1 | 14.1 | 14.5 | 14.5 |
| | | | | | Average | 14.9 | 13.8 |
| | | | | | Std Dev | 1.07 | 0.66 |

The standard deviation of gap distances for the 7 iron to long iron clubs in the custom gapped golf club set was 0.66, which is 0.51 yards lower than the standard deviation of gap distances in the player standard golf club set (a decrease in variance of 47.7%).

The predicted average carry distance for each club in the player standard set and custom gapped set as well as the gap distances between each club for the wedges to 7 iron clubs are displayed below in Table 4B.

**Table 4B - wedges to 7i**

| Club Type | Standard Set Lofts (degrees) | Fast Ball Speed Standard Carry Distance (yds) | Custom Set Lofts (degrees) | Custom Carry Distance (yds) | Target Gap (yds) | Fast Ball Speed Standard Gap (yds) | Custom Gap (yds) |
|---|---|---|---|---|---|---|---|
| 8i | 38.0 | 175.0 | 37.5 | 177.4 | 13 | 15.6 | 13.7 |
| 9i | 42.0 | 160.7 | 41 | 164.7 | 13 | 14.3 | 12.7 |
| PW | 46.0 | 148.1 | 45 | 151.7 | 13 | 12.6 | 13.0 |
| UW | - | - | 49.5 | 138.4 | 13 | - | 13.3 |
| SW | - | - | 54 | 126.1 | 13 | - | 12.3 |
| | | | | | Average | 14.2 | 13.0 |
| | | | | | Std Dev | 1.50 | 0.54 |

The standard deviation of gap distances for the wedges to 7 iron clubs in the custom gapped golf club set was 0.54, which is 0.96 yards lower than the standard deviation of gap distances in the player standard golf club set (a decrease in variance of 64.0%).

As established in Example 1, the predictive model described herein provides a highly accurate prediction of a golf club set based on a given player's reference club characteristics. As illustrated in the above tables, the system is able to produce a recommended set of clubs that achieves significantly more consistent gapping.

### Example 5

In another example, a golfer exhibited a 90 mph ball speed, 17° launch angle and 5000 rpm spin rate with a 29-degree 7-iron used as the reference club. The system can determine the set of predicted ball flight characteristic data for the golfer for a full iron set (4i through lob wedge) using the methods outlined above with respect to FIGS. 3-6. Table 5A below shows predicted ball flight characteristic data for the golfer. The system produced a functional full predicted set makeup for the golfer.

**Table 5A - predicted ball flight characteristic data**

| Club | Carry Dist. (yards) | Total Dist. (yards) | Apex Height (yards) | Gap (yards) |
|---|---|---|---|---|
| 4i | 127.9 | 157.8 | 10.8 | - |
| 5i | 126.1 | 151.5 | 12.1 | 1.8 |
| 6i | 122.0 | 141.8 | 13.3 | 4.1 |
| 7i | 115.7 | 131.5 | 14.0 | 6.3 |
| 8i | 107.7 | 119.7 | 14.4 | 8.0 |
| 9i | 99.7 | 109.3 | 14.4 | 8.0 |
| PW | 91.5 | 99.2 | 14.1 | 8.2 |
| 45° | 80.1 | 86.8 | 12.9 | 11.4 |
| 50° | 67.5 | 72.9 | 11.7 | 12.6 |
| 54° | 57.1 | 61.2 | 11.1 | 10.4 |
| 58° | 46.8 | 49.7 | 10.7 | 10.3 |

The system was configured to determine the optimal combination of iron-type, hybrid-type, and fairway wood-type clubs. The system determined the lowest-lofted playable iron. In the present example, the set defined a gap playability threshold of 3.5 yards with respect to the target gap and an apex height playability threshold of 85% with respect to the apex height of the reference club (in this case, the 7-iron). In the present example, the target gap was determined to be 8.8 yards. An unplayable gap in this situation was therefore any gap less than 4.3 yards. As evidenced by Table 5A, the gap between the 5-iron and the 6-iron was 4.1 yards, and therefore the 5-iron was deemed unplayable for this particular player. In this example, the minimum playable apex height was 11.9 yards (85% of the 7-iron apex height). As evidenced by Table 5A, the apex height of the 4-iron (10.8 yards) was below the apex height playability threshold, and therefore the 4-iron was deemed unplayable for this particular player.

The next step was determining which fairways and hybrids should be selected to fill out the remainder of the golfer's bag. After disqualifying the 4-iron and the 5-iron, the golfer was left with 11-clubs: a driver, putter and 9 irons (6-iron through lob wedge). In this example, the golfer specified a desired longest fairway wood (a 3-wood in this case). The set therefore required two clubs to bridge the gap between the golfer's 3-wood and 6-iron. The system generated predictions to create equal total distance gaps between the golfer's longest iron (the 6-iron) and the longest fairway wood (the 3-wood). The system generated the predicted distances for the hybrid(s) and fairway wood(s) using the same method as that used for predicting the distances of the irons, but for the addition of the adjustment factors for fairway wood-type clubs and hybrid-type clubs in the above section "*Hybrid and Fairway Wood Tradeoffs*". In particular, the adjustment factors for hybrid conversion can include the hybrid ball speed adjustment, the hybrid launch angle adjustment, and the hybrid spin rate adjustment. Similarly, the adjustment factors for fairway wood conversion can include the fairway wood ball speed adjustment, the fairway wood launch angle adjustment, and the fairway wood spin rate adjustment.

Based on the gap between the total distance of the 3-wood and the total distance of the 6-iron, the desired hybrid and fairway wood total gapping was 12.1 yards between each club. In one example implementation, the processor 104 can be configured to divide the number of fairways and hybrids evenly, with more fairway woods in the case of an odd number. In this example, the processor 104 recommended 1 hybrid-type clubs and 2 fairway wood-type clubs. The processor 104 iterated through loft options for all possible candidate clubs to generate a solution that provides gaps between the 3-wood and 6-iron that are as close as possible to the 12.1-yard target gap. The following gapping solution shown in Table 5B can be found for the example player. In the "Gap" column, total distances are used for the gaps between the fairway woods, hybrids, and lowest-lofted iron, and such gaps are designated by the letter "T."

**Table 5B - Gapping solutions**

| Club | Loft Angle (°) | Carry Dist. (yards) | Total Dist. (yards) | Apex Height (yards) | Gap (yards) |
|---|---|---|---|---|---|
| 3W | 14.5 | 146.1 | 178.1 | 11.3 | - |
| 7W | 20.5 | 144.1 | 165.5 | 15.1 | 12.6T |
| 5H | 24 | 132.1 | 153.7 | 13.5 | 11.8T |
| 6i | 25.5 | 122 | 141.8 | 13.3 | 11.9T |
| 7i | 29 | 115.7 | 131.5 | 14 | 6.3 |
| 8i | 33 | 107.7 | 119.7 | 14.4 | 8.0 |
| 9i | 37 | 99.7 | 109.3 | 14.4 | 8.0 |
| PW | 41 | 91.5 | 99.2 | 14.1 | 8.2 |
| 45° | 45.5 | 80.1 | 86.8 | 12.9 | 11.4 |
| 50° | 50 | 67.5 | 72.9 | 11.7 | 12.6 |
| 54° | 54 | 57.1 | 61.2 | 11.1 | 10.4 |
| 58° | 58 | 46.8 | 49.7 | 10.7 | 10.3 |

For the player in this particular example, the processor 104 recommends a 3-wood, a 7-wood, a 5-hybrid and a 6-iron thru 58° lob wedge. Each golfer will have their own unique solution with different recommended clubs and different predicted ball flights.

### Computing Device

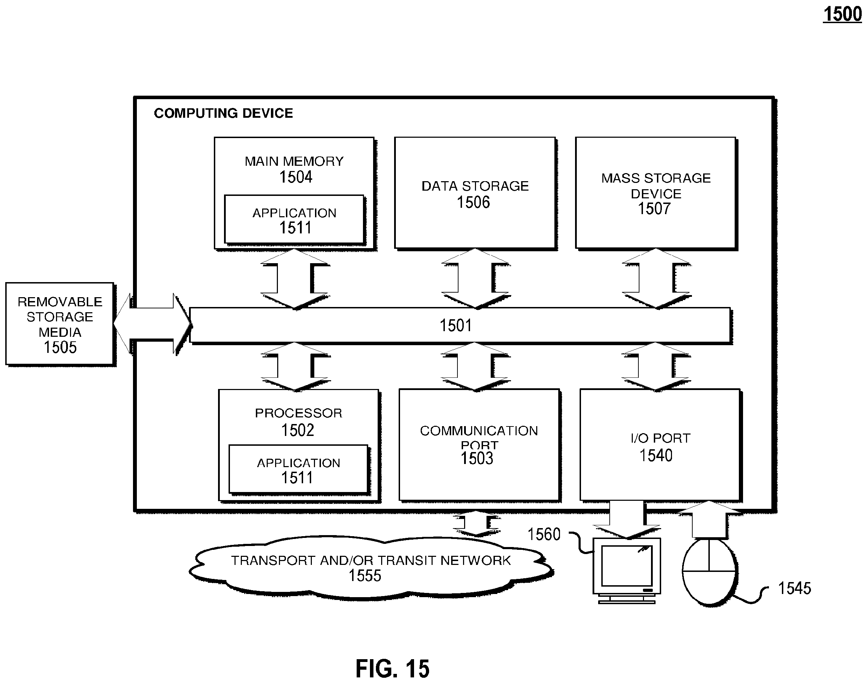

Referring to FIG. 15, a computing device **1500** is illustrated which may take the place of the computing device **140** and be configured, via one or more of an application **1511** or computer-executable instructions, to execute functionality described herein. More particularly, in some embodiments, aspects of the predictive methods herein may be translated to software or machine-level code, which may be installed to and/or executed by the computing device **1500** such that the computing device **1500** is configured to execute functionality described herein. It is contemplated that the computing device **1500** may include any number of devices, such as personal computers, server computers, hand-held or laptop devices, tablet devices, multiprocessor systems, microprocessor-based systems, set top boxes, programmable consumer electronic devices, network PCs, minicomputers, mainframe computers, digital signal processors, state machines, logic circuitries, distributed computing environments, and the like.

The computing device **1500** may include various hardware components, such as a processor **1502**, a main memory **1504** (e.g., a system memory), and a system bus **1501** that couples various components of the computing device **1500** to the processor **1502**. The system bus **1501** may be any of several types of bus structures including a memory bus or memory controller, a peripheral bus, and a local bus using any of a variety of bus architectures. For example, such architectures may include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus.

The computing device **1500** may further include a variety of memory devices and computer-readable media **1507** that includes removable/non-removable media and volatile/nonvolatile media and/or tangible media, but excludes transitory propagated signals. Computer-readable media **1507** may also include computer storage media and communication media. Computer storage media includes removable/non-removable media and volatile/nonvolatile media implemented in any method or technology for storage of information, such as computer-readable instructions, data structures, program modules or other data, such as RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium that may be used to store the desired information/data and which may be accessed by the computing device **1500**.

Communication media includes computer-readable instructions, data structures, program modules, or other data in a modulated data signal such as a carrier wave or other transport mechanism and includes any information delivery media. The term "modulated data signal" means a signal that has one or more of its characteristics set or changed in such a manner as to encode information in the signal. For example, communication media may include wired media such as a wired network or direct-wired connection and wireless media such as acoustic, RF, infrared, and/or other wireless media, or some combination thereof. Computer-readable media may be embodied as a computer program product, such as software stored on computer storage media.

The main memory **1504** includes computer storage media in the form of volatile/nonvolatile memory such as read only memory (ROM) and random access memory (RAM). A basic input/output system (BIOS), containing the basic routines that help to transfer information between elements within the computing device **1500** (e.g., during start-up) is typically stored in ROM. RAM typically contains data and/or program modules that are immediately accessible to and/or presently being operated on by processor **1502**. Further, data storage **1506** in the form of Read-Only Memory (ROM) or otherwise may store an operating system, application programs, and other program modules and program data.

The data storage **1506** may also include other removable/non-removable, volatile/nonvolatile computer storage media. For example, the data storage **1506** may be: a hard disk drive that reads from or writes to non-removable, nonvolatile magnetic media; a magnetic disk drive that reads from or writes to a removable, nonvolatile magnetic disk; a solid state drive; and/or an optical disk drive that reads from or writes to a removable, nonvolatile optical disk such as a CD-ROM or other optical media. Other removable/non-removable, volatile/nonvolatile computer storage media may include magnetic tape cassettes, flash memory cards, digital versatile disks, digital video tape, solid state RAM, solid state ROM, and the like. The drives and their associated computer storage media provide storage of computer-readable instructions, data structures, program modules, and other data for the computing device **1500**.

A user may enter commands and information through a user interface **1540** (displayed via a monitor **1560**) by engaging input devices **1545** such as a tablet, electronic digitizer, a microphone, keyboard, and/or pointing device, commonly referred to as mouse, trackball or touch pad. Other input devices **1545** may include a joystick, game pad, satellite dish, scanner, or the like. Additionally, voice inputs, gesture inputs (e.g., via hands or fingers), or other natural user input methods may also be used with the appropriate input devices, such as a microphone, camera, tablet, touch pad, glove, or other sensor. These and other input devices **1545** are in operative connection to the processor **1502** and may be coupled to the system bus 1501, but may be connected by other interface and bus structures, such as a parallel port, game port or a universal serial bus (USB). The monitor **1560** or other type of display device may also be connected to the system bus **1501**. The monitor **1560** may also be integrated with a touch-screen panel or the like.

The computing device **1500** may be implemented in a networked or cloud-computing environment using logical connections of a network interface **1503** to one or more remote devices, such as a remote computer. The remote computer may be a personal computer, a server, a router, a network PC, a peer device or other common network node, and typically includes many or all of the elements described above relative to the computing device **1500**. The logical connection may include one or more local area networks (LAN) and one or more wide area networks (WAN), but may also include other networks. Such networking environments are commonplace in offices, enterprise-wide computer networks, intranets and the Internet.

When used in a networked or cloud-computing environment, the computing device **1500** may be connected to a public and/or private network through the network interface **1503**. In such embodiments, a modem or other means for establishing communications over the network is connected to the system bus **1501** via the network interface **1503** or other appropriate mechanism. A wireless networking component including an interface and antenna may be coupled through a suitable device such as an access point or peer computer to a network. In a networked environment, program modules depicted relative to the computing device **1500**, or portions thereof, may be stored in the remote memory storage device.

Certain embodiments are described herein as including one or more modules. Such modules are hardware-implemented, and thus include at least one tangible unit capable of performing certain operations and may be configured or arranged in a certain manner. For example, a hardware-implemented module may comprise dedicated circuitry that is permanently configured (e.g., as a special-purpose processor, such as a field-programmable gate array (FPGA) or an application-specific integrated circuit (ASIC)) to perform certain operations. A hardware-implemented module may also comprise programmable circuitry (e.g., as encompassed within a general-purpose processor or other programmable processor) that is temporarily configured by software or firmware to perform certain operations. In some example embodiments, one or more computer systems (e.g., a standalone system, a client and/or server computer system, or a peer-to-peer computer system) or one or more processors may be configured by software (e.g., an application or application portion) as a hardware-implemented module that operates to perform certain operations as described herein.

Accordingly, the term "hardware-implemented module" encompasses a tangible entity, be that an entity that is physically constructed, permanently configured (e.g., hardwired), or temporarily configured (e.g., programmed) to operate in a certain manner and/or to perform certain operations described herein. Considering embodiments in which hardware-implemented modules are temporarily configured (e.g., programmed), each of the hardware-implemented modules need not be configured or instantiated at any one instance in time. For example, where the hardware-implemented modules comprise a general-purpose processor configured using software, the general-purpose processor may be configured as respective different hardware-implemented modules at different times. Software may accordingly configure the processor **1502**, for example, to constitute a particular hardware-implemented module at one instance of time and to constitute a different hardware-implemented module at a different instance of time.

Hardware-implemented modules may provide information to, and/or receive information from, other hardware-implemented modules. Accordingly, the described hardware-implemented modules may be regarded as being communicatively coupled. Where multiple of such hardware-implemented modules exist contemporaneously, communications may be achieved through signal transmission (e.g., over appropriate circuits and buses) that connect the hardware-implemented modules. In embodiments in which multiple hardware-implemented modules are configured or instantiated at different times, communications between such hardware-implemented modules may be achieved, for example, through the storage and retrieval of information in memory structures to which the multiple hardware-implemented modules have access. For example, one hardware-implemented module may perform an operation, and may store the output of that operation in a memory device to which it is communicatively coupled. A further hardware-implemented module may then, at a later time, access the memory device to retrieve and process the stored output. Hardware-implemented modules may also initiate communications with input or output devices.

Computing systems or devices referenced herein may include desktop computers, laptops, tablets e-readers, personal digital assistants, smartphones, gaming devices, servers, and the like. The computing devices may access computer-readable media that include computer-readable storage media and data transmission media. In some embodiments, the computer-readable storage media are tangible storage devices that do not include a transitory propagating signal. Examples include memory such as primary memory, cache memory, and secondary memory (e.g., DVD) and other storage devices. The computer-readable storage media may have instructions recorded on them or may be encoded with computer-executable instructions or logic that implements aspects of the functionality described herein. The data transmission media may be used for transmitting data via transitory, propagating signals or carrier waves (e.g., electromagnetism) via a wired or wireless connection.

Replacement of one or more claimed elements constitutes reconstruction and not repair. Additionally, benefits, other advantages, and solutions to problems have been described with regard to specific embodiments. The benefits, advantages, solutions to problems, and any element or elements that may cause any benefit, advantage, or solution to occur or become more pronounced, however, are not to be construed as critical, required, or essential features or elements of any or all of the claims.

Moreover, embodiments and limitations disclosed herein are not dedicated to the public under the doctrine of dedication if the embodiments and/or limitations: (1) are not expressly claimed in the claims; and (2) are or are potentially equivalents of express elements and/or limitations in the claims under the doctrine of equivalents.

Various features and advantages of the disclosure are set forth herein.

### CLAUSES

Clause 1: A system that improves computed prediction of loft angle combinations for optimal golf club gapping, comprising: a tracking device that generates a first dataset unique to an individual for each of a plurality of golf shots struck by the individual using a reference golf club comprising a reference loft angle, the first dataset including reference ball flight characteristics associated with movement of a golf ball; and a processor in operable communication with the tracking device and configured to transform the first dataset to a second dataset defining predicted ball flight characteristics for one or more candidate golf clubs, wherein the processor: normalizes the reference ball flight characteristics defined by the first dataset as derived from the plurality of golf shots, generates a set of predicted ball flight characteristics for a candidate loft angle by input of the reference ball flight characteristics as normalized and the candidate loft angle to a predetermined ball flight trend function configured to predict changes in ball flight based upon predetermined correlations between loft angle and the ball flight characteristics, and adjusts the set of predicted ball flight characteristics by application of output from one or more adjustment computations that adjust for deviation of one or more of the reference ball flight characteristics of the individual from a predetermined threshold, the one or more adjustment computations improving computed-prediction accuracy by accounting for player-specific discrepancies.

Clause 2: The system of clause 1, wherein the one or more adjustment computations include a ball speed adjustment component and a spin rate adjustment component that account for an effect on each predicted ball flight characteristic due to a deviation from a baseline ball speed value for the reference club and a baseline spin rate value for the reference club, respectively.

Clause 3: The system of clause 2, wherein the processor is further configured to: determine one or more individual-specific slope values descriptive of an expected change in a value of a predicted ball flight characteristic of the set of predicted ball flight characteristics per degree change in loft angle based on the ball speed adjustment component or the spin rate adjustment component; and combine the one or more individual-specific slope values into a total individual-specific slope value for the predicted ball flight characteristic of the set of predicted ball flight characteristics, the total individual-specific slope value being descriptive of an expected change in value of the predicted ball flight characteristic per degree change in loft angle, wherein the total individual-specific slope value includes at least one of a predicted ball speed slope, a predicted launch angle slope, and a predicted spin rate slope.

Clause 4: The system of clause 3, wherein the processor is further configured to: determine a value of a predicted ball flight characteristic of the set of predicted ball flight characteristics using the total individual-specific slope value and a difference in loft angle between the reference loft angle and the candidate loft angle; wherein the set of predicted ball flight characteristics include at least one of a predicted ball speed, a predicted launch angle, and a predicted spin rate

Clause 5: The system of clause 2, wherein the processor is further configured to: select a set of adjustment parameters for the ball speed adjustment component of the one or more adjustment computations for a predicted ball flight characteristic of the set of predicted ball flight characteristics based on the candidate loft angle; and determine a first individual-specific slope value of a set of individual-specific slope values for the predicted ball flight characteristic of the set of predicted ball flight characteristics based on the candidate loft angle, the ball speed adjustment component, and the set of adjustment parameters of the ball speed adjustment component for the predicted ball flight characteristic.

Clause 6: The system of clause 2, wherein the processor is further configured to: select a set of adjustment parameters for the spin rate adjustment component of the one or more adjustment computations for a predicted ball flight characteristic of the set of predicted ball flight characteristics based on the candidate loft angle; and determine a second individual-specific slope value of a set of individual-specific slope values for the predicted ball flight characteristic of the set of predicted ball flight characteristics based on the candidate loft angle, the spin rate adjustment component, and the set of adjustment parameters of the spin rate adjustment component for the predicted ball flight characteristic.

Clause 7: The system of clause 1, wherein as configured the processor further: generates the second dataset to define a plurality of sets of predicted ball flight characteristics for a plurality of candidate golf clubs associated with a plurality of candidate loft angles, each set of predicted ball flight characteristics of the plurality of sets of predicted ball flight characteristics corresponding to a candidate loft angle of the plurality of candidate loft angles and derived from inputting the reference ball flight characteristics as normalized and the candidate loft angle to the predetermined trend function, and adjusts the plurality of sets of predicted ball flight characteristics by application of output from one or more adjustment computations that adjust for deviation of one or more of the reference ball flight characteristics of the individual from a predetermined threshold, the one or more adjustment computations increasing accuracy by accounting for player-specific discrepancies.

Clause 8: The system of clause 7, wherein the processor is further configured to: determine a combination from the plurality of candidate golf clubs with optimal gapping by an evaluation of predicted ball flight characteristics as adjusted for each candidate loft angle available for each candidate golf club.

Clause 9: The system of clause 7, wherein the processor is further configured to: determine a predicted ball flight distance for each candidate loft angle of the plurality of candidate loft angles, and select a candidate loft angle for each of the plurality of candidate golf clubs that maximizes consistency of predicted distance values of the plurality of candidate golf clubs.

Clause 10: The system of clause 1, wherein the first dataset includes a set of first data structures representing ball flight metrics from movement of the golf ball via the reference golf club as generated by the tracking device and the second dataset includes a second set of data structures comprising pseudo-ball flight metrics predicted for a candidate golf club having a candidate loft angle different from the reference loft angle.

Clause 11: The system of clause 10, wherein the processor is further configured to: display a visual representation of the pseudo-ball flight metrics predicted for the golf club having the candidate loft angle different from the reference loft angle, the visual representation illustrating application of the output from the one or more adjustment computations that adjust for deviation of one or more of the reference ball flight characteristics of the individual such that the visual representation more accurately represents predicted ball flight characteristics specific to the individual.

Clause 12: A system that improves computed prediction of loft angle combinations for optimal golf club gapping, comprising: a tracking device that generates a first dataset unique to an individual for each of a plurality of golf shots struck by the individual using a reference golf club comprising a reference loft angle, the first dataset including a set of reference ball flight characteristics associated with movement of a golf ball; and a processor in operable communication with the tracking device and configured to transform the first dataset to a second dataset defining predicted ball flight characteristics for one or more candidate golf clubs, wherein the processor: (a) generates a predicted ball flight characteristic for a candidate club by execution of a predetermined ball flight trend function configured to predict changes in ball flight based upon predetermined correlations between loft angle and general ball flight characteristics, wherein the processor: derives, using a slope function including an overall trend component of the predetermined ball flight trend function and using a reference ball flight characteristic of the set of reference ball flight characteristics, a slope value indicative of a rate of change of a predicted ball flight characteristic per degree change in loft angle; and determines, based on the slope value for the predicted ball flight characteristic and based on a difference between a candidate loft angle of the candidate club and the reference loft angle, a value of the predicted ball flight characteristic that the individual is predicted to produce with the candidate club.

Clause 13: The system of clause 12, wherein the processor further: executes one or more adjustment computations that evaluate one or more adjustment components indicative of an adjustment to the rate of change of the predicted ball flight characteristic per degree change in loft angle, the one or more adjustment computations incorporating the reference ball flight characteristics, the candidate loft angle and a set of adjustment parameters selected based on the candidate loft angle; and combines a result of the overall trend component as evaluated and a result of the one or more adjustment computations as evaluated resulting in the slope value for the predicted ball flight characteristic of the set of predicted ball flight characteristics to derive an adjusted predicted ball flight characteristic that accounts for anomalies unique to the individual from predetermined normal shot trends.

Clause 14: The system of clause 12, wherein the processor adjusts the predicted ball flight characteristic by application of output from an adjustment computation that adjusts for deviation of one or more of the reference ball flight characteristics of the individual from a predetermined threshold, the adjustment computation improving computed-prediction accuracy by accounting for player-specific discrepancies.

Clause 15: The system of clause 12, wherein the processor repeats step (a) to derive a plurality of predicted ball flight characteristics for the candidate club, the plurality of predicted ball flight characteristics including at least one of predicted ball spin, predicted spin rate, and predicted launch angle that the individual will strike a ball using the candidate club having the candidate club loft angle.

Clause 16: The system of clause 15, wherein the processor generates a predicted distance that the individual will strike the ball by modeling a projected trajectory of the ball using at least one of the plurality of predicted ball flight characteristics, the predicted distance accommodating predetermined gapping targets for the individual.

Clause 17: A method for improved computed prediction of loft angle combinations for optimal golf club gapping, comprising accessing, by a processor, a dataset defining reference ball flight characteristics associated with a plurality of golf club shots struck by an individual using a reference club defining a reference club loft angle; and generating, by the processor inputting the reference ball flight characteristics and a plurality of candidate club loft angles associated with a plurality of candidate clubs to a predetermined ball flight trend function, a set of predicted ball flight characteristics for each of a plurality of candidate clubs, the set of predicted ball flight characteristics defining predicted ball flight data for each candidate club, the predetermined ball flight trend function configured to predict changes in ball flight based upon predetermined correlations between loft angle and the ball flight characteristics to account for expected change in a given ball flight characteristic per degree change in loft, wherein the set of predicted ball flight characteristics for each candidate club accommodate predicted gapping between adjacent ones of the plurality of candidate clubs.

Clause 18: The method of clause 17, further comprising: adjusting by the processor at least one of the set of predicted ball flight characteristics for a candidate club by application of output from an adjustment computation that adjusts for deviation of one or more of the reference ball flight characteristics of the individual from a predetermined threshold, the adjustment computation improving computed-prediction accuracy by accounting for player-specific discrepancies

Clause 19: The method of clause 17, further comprising determining by the processor a predicted distance that the individual will strike the ball by with a candidate club of the plurality of candidate clubs by modeling a projected trajectory of the ball using at least one of the set of predicted ball flight characteristics associated with the candidate club, the predicted distance accommodating predetermined gapping targets for the individual.

Clause 20: The method of clause 19, further comprising: determining by the processor a predicted distance that the individual will strike a golf ball with each candidate club leveraging the set of predicted ball flight characteristics for each candidate club; and recommending a combination of a select portion of the plurality of candidate clubs that is expected to produce predicted distances defining an average gap between predicted distances that is closest to a target gap.

## Claims

1. A system that improves computed prediction of loft angle and club type combinations for optimal golf club gapping, comprising:
a tracking device that generates a first dataset unique to an individual for each of a plurality of golf shots struck by the individual using a reference golf club comprising a reference loft angle, the first dataset including reference ball flight characteristics associated with movement of a golf ball; and
a processor in operable communication with the tracking device and configured to transform the first dataset to a second dataset defining predicted ball flight characteristics for one or more candidate golf clubs, wherein the processor:
normalizes the reference ball flight characteristics defined by the first dataset as derived from the plurality of golf shots,
generates a set of predicted ball flight characteristics for a candidate loft angle by input of the reference ball flight characteristics as normalized and the candidate loft angle to a predetermined ball flight trend function configured to predict changes in ball flight based upon predetermined correlations between loft angle and general ball flight characteristics, and
adjusts one or more predicted ball flight characteristics from the set of predicted ball flight characteristics by application of output from one or more club type adjustment computations that adjust the predicted ball flight characteristics based upon predetermined correlations between club type and general ball flight characteristics.

2. The system of claim 1, wherein the one or more club type adjustment computations include one or more hybrid ball flight characteristic adjustments.

3. The system of claim 2, wherein the one or more hybrid ball flight characteristic adjustments include one or more of a hybrid ball speed adjustment, a hybrid launch angle adjustment, or a hybrid spin rate adjustment.

4. The system of claim 2, wherein the one or more hybrid ball flight characteristic adjustments is added to or otherwise combined with one or more of the predicted ball flight characteristics for the candidate loft angle to obtain a hybrid ball flight characteristic corresponding to the candidate loft angle.

5. The system of claim 1, wherein the one or more club type adjustment computations include one or more fairway wood ball flight characteristic adjustments.

6. The system of claim 5, wherein the one or more fairway wood ball flight characteristic adjustments include one or more of a fairway wood ball speed adjustment, a fairway wood launch angle adjustment, or a fairway wood spin rate adjustment.

7. The system of claim 5, wherein the one or more fairway wood ball flight characteristic adjustments is added to or otherwise combined with one or more of the predicted ball flight characteristics for the candidate loft angle to obtain a fairway wood ball flight characteristic corresponding to the candidate loft angle.

8. The system of claim 1, wherein as configured the processor further:
generates the second dataset to define a plurality of sets of predicted ball flight characteristics for a plurality of candidate golf clubs associated with a plurality of candidate loft angles, each set of predicted ball flight characteristics of the plurality of sets of predicted ball flight characteristics corresponding to a candidate loft angle of the plurality of candidate loft angles and derived from inputting the reference ball flight characteristics as normalized and the candidate loft angle to the predetermined ball flight trend function, and
adjusts one or more of the plurality of sets of predicted ball flight characteristics by application of output from the one or more club type adjustment computations.

9. The system of claim 8, wherein the processor is further configured to:
determine a combination from the plurality of candidate golf clubs with optimal gapping by an evaluation of predicted ball flight characteristics as adjusted for each candidate loft angle and associated club type available for each candidate golf club.

10. The system of claim 8, wherein the processor is further configured to:
determine a predicted ball flight distance for each candidate loft angle of the plurality of candidate loft angles, and
select a candidate loft angle and a club type for each of the plurality of candidate golf clubs that maximize consistency of predicted distance values of the plurality of candidate golf clubs.

11. The system of claim 1, wherein the first dataset includes a set of first data structures representing ball flight metrics from movement of the golf ball via the reference golf club as generated by the tracking device and the second dataset includes a second set of data structures comprising pseudo-ball flight metrics predicted for a candidate golf club having a candidate loft angle different from the reference loft angle.

12. The system of claim 11, wherein the processor is further configured to:
display a visual representation of the pseudo-ball flight metrics predicted for the candidate golf club having the candidate loft angle different from the reference loft angle.

13. A system that improves computed prediction of loft angle and club type combinations for optimal golf club gapping, comprising:
a tracking device that generates a first dataset unique to an individual for each of a plurality of golf shots struck by the individual using a reference golf club comprising a reference loft angle, the first dataset including a set of reference ball flight characteristics associated with movement of a golf ball;
a processor in operable communication with the tracking device and configured to transform the first dataset to a second dataset defining club type-specific predicted ball flight characteristics for one or more candidate golf clubs, wherein the processor:
(a) generates a preliminary predicted ball flight characteristic for a candidate club by execution of a predetermined ball flight trend function configured to predict changes in ball flight based upon predetermined correlations between loft angle and general ball flight characteristics, wherein the processor:
derives, using a slope function including an overall trend component of the predetermined ball flight trend function and using a reference ball flight characteristic of the set of reference ball flight characteristics, a slope value indicative of a rate of change of a predicted ball flight characteristic per degree change in loft angle;
determines, based on the slope value for the predicted ball flight characteristic and based on a difference between a candidate loft angle of the candidate club and the reference loft angle, a value of the predicted ball flight characteristic that the individual is predicted to produce with the candidate club;
(b) generates a club type-specific predicted ball flight characteristic for the candidate club by adjusting the preliminary predicted ball flight characteristic by application of output from one or more club type adjustment computations that adjust the preliminary predicted ball flight characteristics based upon predetermined correlations between club type and general ball flight characteristics.

14. The system of claim 13, wherein the one or more club type adjustment computations include one or more hybrid ball flight characteristic adjustments.

15. The system of claim 13, wherein the one or more club type adjustment computations include one or more fairway wood ball flight characteristic adjustments.

16. The system of claim 13, wherein the processor repeats steps (a) and (b) to derive a plurality of club type-specific predicted ball flight characteristics for the candidate club.

17. The system of claim 16, wherein the processor generates a predicted distance that the individual will strike the golf ball by modeling a projected trajectory of the golf ball using at least one of the plurality of club type-specific predicted ball flight characteristics, the predicted distance accommodating predetermined gapping targets for the individual.

18. A method for improved computed prediction of loft angle and club type combinations for optimal golf club gapping, comprising
accessing, by a processor, a dataset defining reference ball flight characteristics associated with a plurality of golf club shots struck by an individual using a reference club defining a reference club loft angle; and
generating, by the processor inputting the reference ball flight characteristics and a plurality of candidate club loft angles associated with a plurality of candidate clubs to a predetermined ball flight trend function, a set of preliminary predicted ball flight characteristics for each of a plurality of candidate clubs, the set of preliminary predicted ball flight characteristics defining predicted ball flight data for each candidate club, the predetermined ball flight trend function configured to predict changes in ball flight based upon predetermined correlations between loft angle and the ball flight characteristics,
adjusting, by the processor applying one or more club type adjustment computations based upon predetermined correlations between club type and general ball flight characteristics, one or more of the set of preliminary predicted ball flight characteristics to generate one or more club type-specific predicted ball flight characteristics;
wherein the one or more club type-specific predicted ball flight characteristics for each candidate club accommodate predicted gapping between adjacent ones of the plurality of candidate clubs.

19. The method of claim 18, further comprising determining by the processor a predicted distance that the individual will strike a golf ball with a candidate club of the plurality of candidate clubs by modeling a projected trajectory of the golf ball using at least one of the set of predicted ball flight characteristics associated with the candidate club, the predicted distance accommodating predetermined gapping targets for the individual.

20. The method of claim 19, further comprising:
determining by the processor a predicted distance that the individual will strike the golf ball with each candidate club leveraging the set of predicted ball flight characteristics for each candidate club; and
recommending a combination of a select portion of the plurality of candidate clubs that is expected to produce predicted distances defining an average gap between predicted distances that is closest to a target gap.
